# EUROPEAN PATENT APPLICATION

(11) **EP 4 675 655 A1**
(43) Date of publication of application: **07.01.2026**
(21) Application number: 24763931.3
(22) Date of filing: 27.02.2024
(51) Int. Cl.: H01F 38/14, H02J 50/12, H02J 50/70

(54) **COIL COMPONENT, POWER TRANSMISSION DEVICE, POWER RECEPTION DEVICE, POWER TRANSMISSION SYSTEM, AND POWER TRANSMISSION METHOD**

(30) Priority: 27.02.2023 JP 2023028823
(71) Applicant: Dai Nippon Printing Co., Ltd., Tokyo 162-8001 (JP)
(72) Inventor: OKABE Masato, Tokyo 162-8001 (JP)
(74) Representative: Müller-Boré & Partner Patentanwälte PartG mbB
(86) International application number: PCT/JP2024/007129
(87) International publication number: WO 2024/181452

(57) **Abstract**

A coil component 10 according to one embodiment includes a first planar coil 11, a second planar coil 12 that overlaps the first planar coil 11 and is not connected to the first planar coil 11, and a capacitor 70 that is connected to one of the first planar coil 11 and the second planar coil 12 and constitutes a resonant circuit together with the first planar coil or the second planar coil 12 to which the capacitor 70 is connected. The second planar coil 12 has a thickness of 0.15 mm or more and 0.35 mm or less.

## Description

### Technical Field

The present disclosure relates to a coil component, a power transmission device, a power receiving device, a power transfer system, and a power transfer method.

### Background Art

Wireless power transfer systems that transfer power without contact are becoming more widespread. Examples of the contactless power transfer method include an electromagnetic induction method, a magnetic field resonance method, and a radio wave reception method. For example, JP 2011-200045A discloses a power transfer system of a magnetic field resonance method. The power transfer system of a magnetic field resonance method has been attracting attention as a technique for realizing high power transfer.

When power is transferred without contact, for example, a high-frequency current is caused to flow through a resonant circuit including a coil. In this case, a skin effect may occur in the coil. The skin effect increases the AC resistance, which increases the power consumption due to generation of heat. Hence, the skin effect causes a decrease in transfer efficiency.

The use of a litz wire as the coil suppresses the skin effect. However, the litz wire, which is formed by twisting a large number of enameled wires, is expensive to manufacture and requires time and effort to manufacture. The time and effort required for manufacturing the litz wire increase as the coil size increases. Meanwhile, a technique using a planar coil with a plate-like spiral shape, the planar coil having a conductor with a rectangular cross-section is also known (see JP2020-47614A). Such a planar coil can improve the manufacturing efficiency regardless of the coil size. Hence, such a planar coil is suitable for, for example, a high-power wireless power transfer system for an electric vehicle, in which the coil size may be large.

In a wireless power transfer system for an electric vehicle, a power transmission device is installed on a road surface in a parking lot or the like, and a power receiving device is installed in the electric vehicle. For example, when the planar coils are used for an electric vehicle, particularly the heights of both the power transmission device and the power receiving device can be reduced. Hence, the planar coils are advantageous in, for example, the field of vehicles, where the space constraints are severe.

### Citation List

### Patent Literature

PTL 1: JP2011-200045A
PTL 2: JP2020-47614A

### Summary of Invention

PTL 2 discloses a power transmission device including a power supply coil connected to an AC power supply and a coupling coil separated from the power supply coil, and a power receiving device including an output coil for outputting power to the outside and a coupling coil separated from the output coil.

The present inventor has found that when the above-described planar coils are applied to the power transmission device and the power receiving device disclosed in PTL 2, the electrical resistance is relatively large, leading to a situation in which desired power transfer cannot be performed. The present inventor has made intensive studies on this situation and found a method with which this situation can be avoided and sufficient power transfer can be realized.

An object of the present disclosure is to provide a coil component, a power transmission device, a power receiving device, a power transfer system, and a highly efficient power transfer method that can achieve efficient power transfer.

Embodiments of the present disclosure relate to [1] to [26] below.
[1] A coil component including:
   a first planar coil;
   a second planar coil that overlaps the first planar coil and is not connected to the first planar coil; and
   a capacitor that is connected to one of the first planar coil and the second planar coil and constitutes a resonant circuit together with the one of the first planar coil and the second planar coil to which the capacitor is connected,
   wherein the second planar coil has a thickness of 0.15 mm or more and 0.35 mm or less.
[2] The coil component according to [1], wherein the capacitor is connected to one of the first planar coil and the second planar coil having a higher inductance.
[3] The coil component according to [1] or [2], further including a magnetic member having magnetism and including a portion covering a surface of the first planar coil opposite from a surface facing the second planar coil.
[4] The coil component according to [3], wherein
   the coil component includes only the first planar coil and the second planar coil having the same number of turns as planar coils, and
   the capacitor is connected to the first planar coil.
[5] The coil component according to [3], wherein the magnetic member integrally holds the first planar coil and the second planar coil in a state in which the first planar coil and the second planar coil overlap each other with a gap therebetween, and the magnetic member further includes a portion covering a side surface of the first planar coil and a portion filling the gap.
[6] The coil component according to any one of [3] to [5], wherein the magnetic member contains a resin and magnetic particles held in the resin.
   In the coil component according to any one of [3] to [6], the relative permeability of the magnetic member may be 5.0 or more.
[7] The coil component according to any one of [3] to [6], wherein the magnetic member includes a wall portion protruding from the second planar coil.
[8] The coil component according to any one of [1] to [7], wherein the first planar coil includes a plurality of turn portions arranged in a direction orthogonal to a center axis of the first planar coil and the second planar coil includes a plurality of turn portions arranged in a direction orthogonal to a center axis of the second planar coil, at least one of the plurality of turn portions of the first planar coil and at least one of the plurality of turn portions of the second planar coil at least partially overlap each other in an axial direction of the first planar coil, and the turn portions of the first planar coil and the second planar coil overlapping in the axial direction of the first planar coil at least partially extend parallel to each other.
[9] The coil component according to [8], wherein
   the number of the plurality of turn portions of the first planar coil and the number of the plurality of turn portions of the second planar coil are equal, and
   a turn portion of the first planar coil that is an n-th as counted from a center of the first planar coil at least partially overlap, in the axial direction of the first planar coil, and at least partially extend parallel to a turn portion of the second planar coil that is the n-th as counted from a center of the second planar coil.
[10] The coil component according to [8], wherein
   the number of the plurality of turn portions of the first planar coil is half or twice the number of the plurality of turn portions of the second planar coil,
   when the number of the plurality of turn portions of the first planar coil is half the number of the plurality of turn portions of the second planar coil, the turn portion of the first planar coil that is the n-th as counted from the center of the first planar coil at least partially overlap, in the axial direction of the first planar coil, and at least partially extend parallel to a turn portion of the second planar coil that is a ((2 × n) - 1)-th as counted from the center of the second planar coil and a turn portion of the second planar coil that is a (2 × n)-th as counted from the center of the second planar coil, and
   when the number of the plurality of turn portions of the first planar coil is twice the number of the plurality of turn portions of the second planar coil, a turn portion of the second planar coil that is an m-th as counted from the center of the second planar coil at least partially overlap, in the axial direction of the first planar coil, and at least partially extend parallel to a turn portion of the first planar coil that is a ((2 × m) - 1)-th as counted from the center of the first planar coil and a turn portion of the first planar coil that is a (2 × m)-th as counted from the center of the first planar coil.
[11] The coil component according to any one of [1] to [10], wherein the first planar coil has a thickness of 0.1 mm or more and 1.0 mm or less.
[12] The coil component according to any one of [1] to [11], wherein the first planar coil and the second planar coil overlap each other with a gap therebetween, and the gap is 0.5 mm or more and 2.0 mm or less.
[13] The coil component according to any one of [1] to [12], further including at least one first additional planar coil disposed between the first planar coil and the second planar coil and connected in series to the first planar coil,
   wherein the first additional planar coil has a thickness of 0.15 mm or more and 0.35 mm or less.
[14] The coil component according to [13], wherein the capacitor is connected to the first planar coil via the first additional planar coil.
[15] The coil component according to any one of [1] to [12], further including at least one second additional planar coil disposed between the first planar coil and the second planar coil and connected in series to the second planar coil,
   wherein the second additional planar coil has a thickness of 0.15 mm or more and 0.35 mm or less.
[16] The coil component according to [15], wherein the capacitor is connected to the second planar coil via the second additional planar coil.
[17] The coil component according to any one of [1] to [16], wherein the one of the first planar coil and the second planar coil that is not connected to the capacitor is supplied with alternating current at 79 KHz or more and 90 KHz or less, or an AC magnetic field at 79 KHz or more and 90 KHz or less.
[18] A power transmission device including the coil component according to any one of [1] to [17].
[19] The power transmission device according to [18], further including a high-frequency current supply part that supplies alternating current at 79 KHz or more and 90 KHz or less to the coil component.
[20] A power receiving device including the coil component according to any one of [1] to [17].
[21] The power receiving device according to [20], further including a conversion part that converts alternating current at 79 KHz or more and 90 KHz or less generated by electromagnetic induction in the coil component into direct current.
[22] A power transfer system including: a power transmission device; and a power receiving device, wherein at least one of the power transmission device and the power receiving device includes the coil component according to any one of [1] to [17].
[23] A power transfer method including:
   supplying alternating current at 79 KHz or more and 90 KHz or less to the coil component according to any one of [1] to [17], the coil component being provided in a power transmission device; and
   generating a current in a power receiving device based on a magnetic field generated in the power transmission device.
[24] A coil component including:
   a first planar coil;
   a second planar coil that overlaps the first planar coil and is not connected to the first planar coil; and
   a capacitor that is connected to one of the first planar coil and the second planar coil and constitutes a resonant circuit together with the one of the first planar coil and the second planar coil to which the capacitor is connected, wherein
   the second planar coil has a thickness of 0.225 mm or more and 0.275 mm or less, and
   the one of the first planar coil and the second planar coil that is not connected to the capacitor is supplied with alternating current at 100 KHz or more and less than 200 KHz, or an AC magnetic field at 100 KHz or more and less than 200 KHz.
[25] A coil component including:
   a first planar coil;
   a second planar coil that overlaps the first planar coil and is not connected to the first planar coil; and
   a capacitor that is connected to one of the first planar coil and the second planar coil and constitutes a resonant circuit together with the one of the first planar coil and the second planar coil to which the capacitor is connected, wherein
   the second planar coil has a thickness of 0.075 mm or more and 0.175 mm or less, and
   the one of the first planar coil and the second planar coil that is not connected to the capacitor is supplied with alternating current at 200 KHz or more and 1 MHz or less, or an AC magnetic field at 200 KHz or more and 1 MHz or less.
[26] A coil component including:
   a first planar coil;
   a second planar coil that overlaps the first planar coil and is not connected to the first planar coil; and
   a capacitor that is connected to one of the first planar coil and the second planar coil and constitutes a resonant circuit together with the one of the first planar coil and the second planar coil to which the capacitor is connected, wherein
   the second planar coil has a thickness of 0.45 mm or more, and
   the one of the first planar coil and the second planar coil that is not connected to the capacitor is supplied with alternating current at 1.1 MHz or more or an AC magnetic field at 1.1 MHz or more.

According to the present disclosure, efficient power transfer can be realized.

### Brief Description of Drawings

[Fig. 1] Fig. 1 schematically illustrates a wireless power transfer system to which a coil component according to a first embodiment is applied.
[Fig. 2] Fig. 2 is a perspective view of the coil component according to the first embodiment.
[Fig. 3] Fig. 3 is an exploded perspective view of the coil component illustrated in Fig. 2.
[Fig. 4] Fig. 4 is a sectional view of the coil component taken along line IV-IV in Fig. 2.
[Fig. 5] Fig. 5 is a graph illustrating the relationship between the thickness of the planar coil and the Q value in the coil component illustrated in Fig. 2.
[Fig. 6] Fig. 6 is a sectional view of a coil component according to a second embodiment.
[Fig. 7] Fig. 7 is a perspective view of a coil component according to a third embodiment.
[Fig. 8] Fig. 8 is an exploded perspective view of the coil component illustrated in Fig. 7.
[Fig. 9] Fig. 9 is a sectional view of the coil component in Fig. 7.
[Fig. 10] Fig. 10 is a perspective view of a coil component according to a fourth embodiment.
[Fig. 11] Fig. 11 is an exploded perspective view of the coil component illustrated in Fig. 10.
[Fig. 12] Fig. 12 is a sectional view of the coil component in Fig. 10.

### Description of Embodiments

Hereinbelow, embodiments will be described with reference to the drawings.

In the present specification, the terms such as "sheet", "film", and "plate" are not distinguished from each other based only on the difference in the names. Hence, for example, the "sheet" is a concept including a member that can be called a film or a plate.

### <<First Embodiment>>

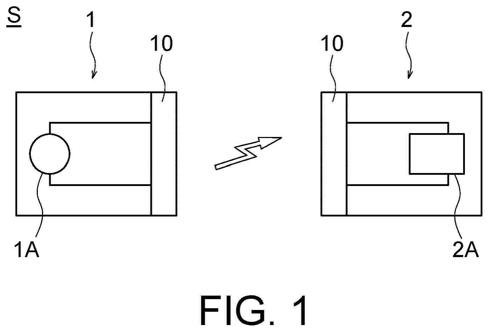

Fig. 1 schematically illustrates a wireless power transfer system S to which coil components 10 according to a first embodiment are applied. First, the wireless power transfer system S (hereinbelow, abbreviated as a power transfer system S) will be described with reference to Fig. 1. It is needless to say that a coil component according to an embodiment different from the first embodiment can be applied to the power transfer system S.

### <Wireless Power Transfer System>

The power transfer system S includes a power transmission device 1 and a power receiving device 2. The power transmission device 1 includes a coil component 10 and a high-frequency current supply part 1A. The coil component 10 in the power transmission device 1 functions as a power transmission coil. The high-frequency current supply part 1A supplies a high-frequency current to the coil component 10, serving as the power transmission coil.

The power receiving device 2 includes a coil component 10 and a conversion part 2A. The coil component 10 in the power receiving device 2 functions as a power receiving coil. The conversion part 2A shapes the high-frequency current generated in the coil component 10. The conversion part 2A includes a rectifier circuit that converts a high-frequency current into direct current. The conversion part 2A may include, for example, a smoothing capacitor and a full-wave rectifier circuit including a plurality of diodes.

In this embodiment, each of the power transmission device 1 and the power receiving device 2 includes the coil component 10. However, the coil component 10 may be used only in one of the power transmission device 1 or the power receiving device 2, and a coil component of a different type may be used in the other. The coil component 10 may be used in one of the power transmission device 1 or the power receiving device 2, and the coil component according to another embodiment may be used in the other.

When power is transferred wirelessly (without contact) from the power transmission device 1 to the power receiving device 2, the power transmission device 1 supplies a high-frequency current having a predetermined frequency from the high-frequency current supply part 1A to the coil component 10 that serves as the power transmission coil. At this time, a magnetic field is generated in the coil component 10 by electromagnetic induction. Then, in the power receiving device 2, due to the influence of the magnetic field, a high-frequency current is generated in the coil component 10 that serves as the power receiving coil. Specifically, the power receiving device 2 receives the magnetic field or is influenced by the magnetic field, allowing the high-frequency current to pass therethrough by electromagnetic induction. The conversion part 2A converts the high-frequency current into direct current, and supplies the converted direct current to, for example, a battery (not illustrated).

For example, the coil component 10 according to the first embodiment described below is manufactured to achieve higher performance when alternating current at 75 KHz or more and 100 KHz or less is supplied or when an AC magnetic field at 75 KHz or more and 100 KHz or less is supplied. Specifically, the coil component 10 is manufactured to achieve particularly higher performance when alternating current at 79 KHz or more and 90 KHz or less, particularly, alternating current at 85 KHz, is supplied, or when an AC magnetic field at 79 KHz or more and 90 KHz or less, particularly, an AC magnetic field at 85 KHz, is supplied. Hence, the high-frequency current supply part 1A may supply, for example, alternating current at 75 KHz or more and 100 KHz or less, alternating current at 79 KHz or more and 90 KHz or less, or alternating current at 85 KHz so as to correspond to alternating current desirable for the coil component 10. The conversion part 2A may convert alternating current at 75 KHz to 100 KHz, alternating current at 79 KHz or more and 90 KHz or less, or alternating current at 85 KHz, which is generated by electromagnetic induction when an AC magnetic field is supplied, into direct current.

The power transfer system S illustrated in Fig. 1 employs the magnetic field resonance method as the power transmission method. Specifically, in this example, the coil components 10 applied to the power transfer system S each include a first planar coil 11 and a second planar coil 12 that are not electrically connected to each other. In the power transmission device 1, the first planar coil 11 is connected to the high-frequency current supply part 1A. In this configuration, the first planar coil 11 generates a magnetic field in response to the supply of the high-frequency current, which causes the second planar coil 12 to also generate a magnetic field. Meanwhile, the second planar coil 12 of the coil component 10 in the power receiving device 2 also generates a magnetic field due to the influence of the magnetic field generated by the second planar coil 12 of the power transmission device 1. As a result, the first planar coil 11 of the coil component 10 in the power receiving device 2 can generate a magnetic field, and can generate a high-frequency current. However, the coil component 10 according to this embodiment may be used in a power transfer system of an electromagnetic induction method. The power transfer system S is configured as a system that wirelessly transmits power to an electric vehicle. In this case, the power transmission device 1 is installed on a road, in a parking lot, or the like. The power receiving device 2 is installed in an electric vehicle.

However, the application of the power transfer system S is not limited to power transfer to an electric vehicle. For example, the power transfer system S may be used for power transfer to a flying object such as a drone, or a robot. The power transfer system S may be used for power transfer to a submarine in the sea or an exploration robot.

### <Coil Component>

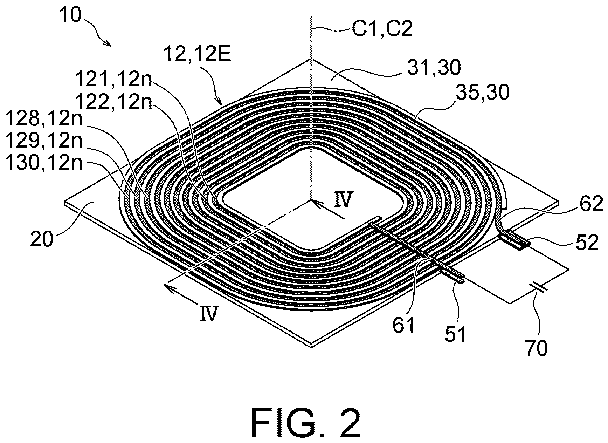

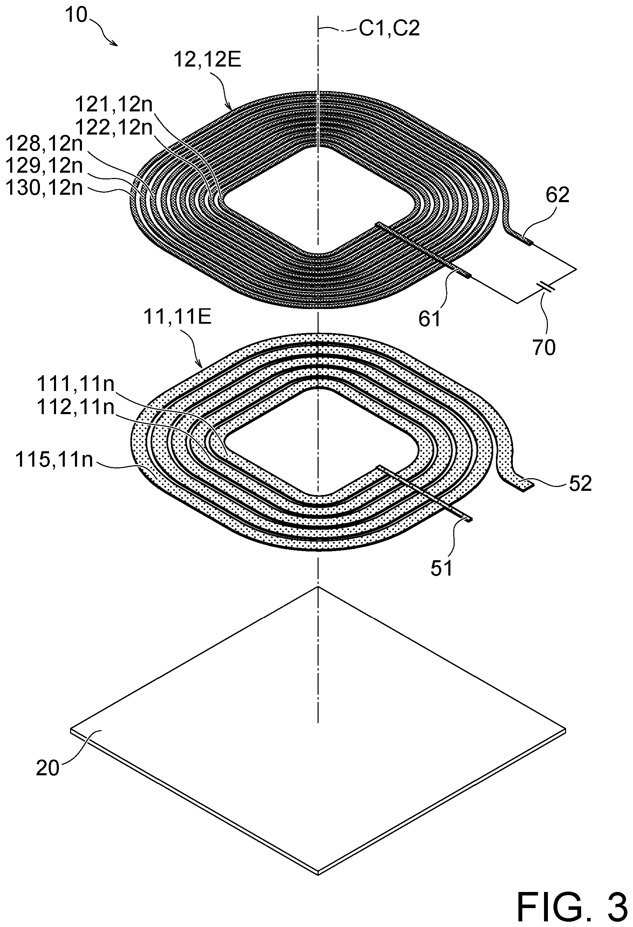

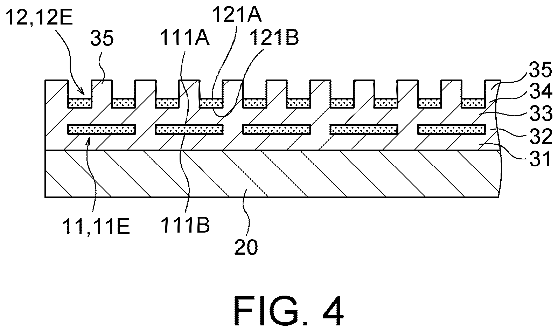

The coil component 10 according to the first embodiment will be described below. Fig. 2 is a perspective view of the coil component 10. Fig. 3 is an exploded perspective view of the coil component 10. Fig. 4 is a sectional view of the coil component 10 taken along line IV-IV in Fig. 2.

As illustrated in Figs. 2 to 4, the coil component 10 includes the first planar coil 11, the second planar coil 12, a magnetic shield member 20, a holding body 30, a power supply/receiving first terminal 51, a power supply/receiving second terminal 52, a coupling first terminal 61, a coupling second terminal 62, and a capacitor 70.

As illustrated in Fig. 4, the first planar coil 11 and the second planar coil 12 overlap each other with a gap therebetween. The first planar coil 11 and the second planar coil 12 are not electrically or physically connected to each other. The holding body 30 is a member that includes a portion (a first layer portion 31 illustrated in Fig. 4) covering the surface of the first planar coil 11 on the opposite side from the surface facing the second planar coil 12, and that is in contact with at least the first planar coil 11 to hold the first planar coil 11. In this embodiment, the holding body 30 integrally holds the first planar coil 11 and the second planar coil 12, and thus the first planar coil 11 and the second planar coil 12 are maintained in a state of overlapping with a gap therebetween.

In Fig. 3, the holding body 30 is not illustrated for convenience of description. Although a detailed description will be given below, as illustrated in Fig. 4, the holding body 30 includes the first layer portion 31 that covers the surface of the first planar coil 11 on the opposite side from the surface facing the second planar coil 12, and a second layer portion 32, a third layer portion 33, a fourth layer portion 34, and a wall portion 35 that are formed so as to be stacked from the first layer portion 31 toward the second planar coil 12. The holding body 30 is formed in a shape that wraps the first planar coil 11 and the second planar coil 12, and integrally holds the first planar coil 11 and the second planar coil 12.

The magnetic shield member 20 is disposed facing the surface of the holding body 30 (more precisely, the first layer portion 31, which serves as the above-described covering portion of the holding body 30) on the opposite side from the surface facing the first planar coil 11. The magnetic shield member 20 also includes a portion that covers the surface of the first planar coil 11 on the opposite side from the surface facing the second planar coil 12. Specifically, the magnetic shield member 20 includes a portion that covers, over the first layer portion 31 of the holding body 30, the surface of the first planar coil 11 on the opposite side from the surface facing the second planar coil 12.

In this example, the power supply/receiving first terminal 51 is connected to one end of two ends of the first planar coil 11, and the power supply/receiving second terminal 52 is connected to the other end of the two ends of the first planar coil 11. The two ends of the first planar coil 11 mentioned here are the two ends of the first planar coil 11 in the direction in which the first planar coil 11 extends as a wire when the first planar coil 11 is viewed as conductor winding. In this example, the coupling first terminal 61 is connected to one end of two ends of the second planar coil 12, and the coupling second terminal 62 is connected to the other end of the two ends of the second planar coil 12. The two ends of the second planar coil 12 mentioned here are the two ends of the second planar coil 12 in the direction in which the second planar coil 12 extends as a wire when the second planar coil 12 is viewed as conductor winding. The capacitor 70 is electrically connected to the coupling first terminal 61 and the coupling second terminal 62. Thus, the capacitor 70 constitutes a resonant circuit together with the second planar coil 12. As is clear from Figs. 2 and 3, the resonant circuit mentioned here means a closed circuit that forms a closed loop without being directly or indirectly connected to an AC power supply or a battery (e.g., a battery via the conversion part 2A). This resonant circuit can also be described as a closed circuit consisting only of passive components. Hereinbelow, each element will be described in detail.

### (First Planar Coil and Second Planar Coil)

The first planar coil 11 has a spiral shape and is formed of a conductive material. In this embodiment, the first planar coil 11 contains copper. More specifically, the first planar coil 11 is formed of copper. However, the first planar coil 11 may contain a copper alloy, aluminum, an aluminum alloy, or the like.

The first planar coil 11 is plate-shaped, and as illustrated in Fig. 4, the sectional shape of the first planar coil 11 in a direction orthogonal to the direction in which the first planar coil 11 turns in a spiral shape is rectangular.

In Figs. 2 and 3, reference sign C1 indicates a first center axis of the first planar coil 11 passing through the center of the spiral shape of the first planar coil 11. Hereinbelow, the axial direction of the first planar coil 11 means a direction extending on the first center axis C1 or a direction parallel to the first center axis C1. A direction orthogonal to the first center axis C1 is referred to as a radial direction of the first planar coil 11.

The first planar coil 11 has a spiral conductor 11E including a plurality of turn portions 11n. The plurality of turn portions 11n of the first planar coil 11 are arranged in the direction orthogonal to the first center axis C1 of the spiral shape. Specifically, the plurality of turn portions 11n are connected so as to be gradually away from the first center axis C1 in the radially outward direction from the first center axis C1 of the spiral shape. In this way, a spiral shape is formed.

Each turn portion 11n basically has such a shape that a wire-shaped conductor portion extends around the first center axis C1 by 360° without forming a ring. In the case of a so-called planar coil, two ends of a turn portion 11n are shifted from each other in the radial direction. In the plurality of turn portions 11n, the radially outer end of one turn portion 11n is connected to the radially inner end of another turn portion 11n, and the other turn portion 11n extends away from the first center axis C1.

Hereinbelow, among the plurality of turn portions 11n, the one closest to the first center axis C1 may be referred to as a turn portion 111. The turn portion connected to the turn portion 111 may be referred to as a turn portion 112. In this embodiment, the plurality of turn portions 11n include five turn portions 111 to 115. Hereinbelow, when matters common to the plurality of turn portions 11n will be described, the plurality of turn portions 11n will be referred to as the turn portions 11n.

In this embodiment, the turn portions 11n are arranged in a rectangular spiral shape. However, the turn portions 11n may form a circular spiral. The spiral shape referred to in the present specification and the present disclosure means the shape of a spiral plane curve. The plane curve referred to herein includes a plane pattern in which the turn portion repeatedly turns while being bent in a polygonal line shape as illustrated. In other words, the spiral shape is a shape in which the turn portion is wound around the first center axis C1 of the first planar coil 11 so as to be gradually located on the outer side.

As illustrated in Fig. 3, the radially inner end of the turn portion 111, which is the closest to the first center axis C1 (the end close to the first center axis C1), is electrically connected to the power supply/receiving first terminal 51. Meanwhile, the radially outer end of the turn portion 115, which is the farthest from the first center axis C1 among the plurality of turn portions 11n (the end farthest from the first center axis C1), is electrically connected to the power supply/receiving second terminal 52.

Here, the radially inward direction of the first planar coil 11 (the turn portions 11n) means the direction toward the first center axis C1 in the radial direction. The radially outward direction of the first planar coil 11 (the turn portions 11n) means the direction away from the first center axis C1 in the radial direction. In this embodiment, the first center axis C1 is defined as follows. First, a linear virtual turn portion having a shape similar to the shape of the innermost turn portion 111 is sequentially drawn from the radially inner end of the innermost turn portion 111 radially inward so as to form a spiral shape. The drawing is continued until a virtual turn portion that fits within a diameter of 1 cm can be drawn. A line passing through the radially inner region of the virtual turn portion located within the diameter of 1 cm in a direction perpendicular to the circumferential direction and the radial direction of the spiral shape is defined as the first center axis C1.

The first planar coil 11 in this embodiment is formed by punching a copper plate into a spiral shape, for example. However, the first planar coil 11 can also be formed by etching a copper foil into a spiral shape.

The thickness of the first planar coil 11 (the thickness of the conductor 11E) may be, for example, 0.1 mm or more and 1.0 mm or less. The coil component 10 provides or receives a magnetic field from the side not covered with the magnetic shield member 20. According to the findings of the present inventor, good coil performance is obtained when the thickness of the coil closest to the magnetic shield member 20 is relatively large. From this standpoint, the thickness of the first planar coil 11 may be 0.5 mm or more and 1.0 mm or less. The thickness of the first planar coil 11 is preferably 1.0 mm or less from the standpoint of reducing weight and suppressing an increase in the size of the product. The radius of the first planar coil 11 (the distance from the first center axis C1 to the portion farthest from the first center axis C1 in the radial direction) may be 80 mm or more, or may be 80 mm or more and 450 mm or less. The aspect ratio of the first planar coil 11 (conductor 11E) having a rectangular sectional shape is determined by dividing the radial width (the width in the radial direction) of the first planar coil 11 (conductor 11E) by the thickness of the first planar coil 11 (conductor 11E). The aspect ratio of the first planar coil 11 (the conductor 11E) may be 2 or more and 12 or less, or 3 or more and 10 or less.

When electric power is transferred to an electric vehicle by using the magnetic field resonance method, it is desirable to be able to transfer power of 1 Kw or more, desirably, 5 Kw or more, over a frequency band of 10 KHz to 200 KHz, specifically 75 KHz or more and 100 KHz or less, and more specifically from 79 KHz to 90 KHz for a high-frequency current. In this case, the thickness of the first planar coil 11 formed of copper is preferably 0.2 mm or more. From this standpoint, the lower limit value of the thickness of the first planar coil 11 may be set to 0.2 mm. In addition, when power is transferred to an electric vehicle, it is not desired that the size is excessively large, and the size may be limited. From this standpoint, it is preferable that the first planar coil 11 and the second planar coil 12 described below, specifically the conductor 11E of the first planar coil 11 and the conductor 12E of the second planar coil 12, be formed to have a size that fits in a square with sides of 800 mm.

The wire width of the first planar coil 11 (the wire width of the conductor 11E), that is, the radial width (the width in the radial direction) of each turn portion 11n, is not particularly limited. However, in consideration of enabling transfer of power of 1 Kw or more, desirably, 5 Kw or more, over a frequency band of, for example, 79 KHz to 90 kHz for a high-frequency current, the radial width of the turn portions 11n may be 2 mm or more and 20 mm or less, 2 mm or more and 16 mm or less, 2 mm or more and 12 mm or less, or 2 mm or more and 8 mm or less. The number of turns of the first planar coil 11 may be 2 or more and 12 or less, but is not particularly limited.

The second planar coil 12 is also in a spiral shape, and the second planar coil 12 contains copper. Specifically, the second planar coil 12 is formed of copper. The material of the second planar coil 12 is not particularly limited, and the second planar coil 12 may include a copper alloy, aluminum, or an aluminum alloy. The second planar coil 12 is also plate-shaped, and as illustrated in Fig. 4, the sectional shape of the second planar coil 12 in a direction orthogonal to the direction in which the second planar coil 12 turns in a spiral shape is rectangular.

In Figs. 2 and 3, reference sign C2 indicates a second center axis of the second planar coil 12 passing through the center of the spiral shape of the second planar coil 12. Hereinbelow, the axial direction of the second planar coil 12 means a direction extending on the second center axis C2 or a direction parallel to the second center axis C2. A direction orthogonal to the second center axis C2 is referred to as a radial direction of the second planar coil 12.

In this embodiment, the second planar coil 12 is disposed so as to be coaxial with the first planar coil 11. Specifically, the first center axis C1 of the first planar coil 11 and the second center axis C2 of the second planar coil 12 coincide with each other; in other words, the first center axis C1 and the second center axis C2 are located on the same line. However, the first planar coil 11 and the second planar coil 12 may overlap each other such that the first center axis C1 of the first planar coil 11 and the second center axis C2 of the second planar coil 12 are parallel to each other. In other words, the first planar coil 11 and the second planar coil 12 do not have to be coaxial.

The second planar coil 12 also has a spiral conductor 12E including a plurality of turn portions 12n. The plurality of turn portions 12n of the second planar coil 12 are arranged in the direction orthogonal to the second center axis C2 of the spiral shape.

How the plurality of turn portions 12n are connected and the names thereof, such as the turn portion 121, etc., depending on the position are the same as those of the turn portions 11n of the first planar coil 11. In this embodiment, the number of turns of the first planar coil 11 and the number of turns of the second planar coil 12 are different, and the plurality of turn portions 12n include ten turn portions 121 to 130. Accordingly, the inductance of the second planar coil 12 is higher than the inductance of the first planar coil 11. The turn portions 12n form a rectangular spiral, similarly to the turn portions 11n. The turn portions 12n may form a circular spiral. The number of turns of the first planar coil 11 and the number of turns of the second planar coil 12 may be the same. The inductance of the second planar coil 12 may be small. For example, a configuration in which the turn portions 11n are rectangular and the turn portions 12n are circular may be employed.

As illustrated in Fig. 4, in this embodiment, at least one of the plurality of turn portions 11n of the first planar coil 11 and at least one of the plurality of turn portions 12n of the second planar coil 12 at least partially overlap each other in the axial direction of the first planar coil 11. The turn portion 11n of the first planar coil 11 and the turn portion 12n of the second planar coil 12 that overlap each other in the axial direction of the first planar coil 11 extend at least partially parallel to each other with the same winding directions. What is meant by the same winding directions is a state in which the winding direction of the first planar coil 11 and the winding direction of the second planar coil 12 do not intersect at a point but overlap each other on the same line over a certain distance.

The length of the portion where the turn portion 11n of the first planar coil 11 and the turn portion 12n of the second planar coil 12 overlap each other and extend parallel to each other as described above may be 1/2 or more or 3/4 or more of the total length of each of the turn portions. The turn portion 11n of the first planar coil 11 and the turn portion 12n of the second planar coil 12 may overlap each other and extend parallel to each other over the entire length thereof. The present inventor has found that the greater the proportion of the first planar coil 11 and the second planar coil 12 extending in parallel with each other and overlapping each other, the more the eddy current loss can be suppressed.

More specifically, in this embodiment, the number of the plurality of turn portions 11n (the number of turns) of the first planar coil 11 is half the number of the plurality of turn portions 12n (the number of turns) of the second planar coil 12. The turn portion 11n of the first planar coil 11 that is the n-th (n is an integer from 1 to 5, which is the number of turns of the first planar coil 11) as counted from the center of the first planar coil 11 at least partially overlap, in the axial direction of the first planar coil 11, and at least partially extend parallel to the turn portion 12n of the second planar coil 12 that is the ((2 × n) - 1)-th as counted from the center of the second planar coil 12 and the turn portion 12n of the second planar coil 12 that is the (2 × n)- th as counted from the center of the second planar coil 12. More specifically, for example, the turn portion 111 of the first planar coil 11 at least partially overlap, in the axial direction of the first planar coil 11, and at least partially extend parallel to the turn portions 111 and 112 of the second planar coil 12. For example, the turn portion 115 of the first planar coil 11 at least partially overlap, in the axial direction of the first planar coil 11, and at least partially extend parallel to the turn portions 129 and 130 of the second planar coil 12.

Furthermore, as illustrated in Fig. 4, the turn portion 11n of the first planar coil 11 and the turn portions 12n of the second planar coil 12 that overlap each other in the axial direction of the first planar coil 11 and extend parallel to each other do not protrude beyond each other in the radial direction. According to the findings of the present inventor, in this case, the performance of the coil component 10 is improved.

Meanwhile, the radially inner end of the turn portion 121, which is the closest to the second center axis C2, is electrically connected to the coupling first terminal 61. The radially outer end of the turn portion 130, which is the farthest from the second center axis C2 (the end farther from the second center axis C2), is electrically connected to the coupling second terminal 62.

The directions meant by radially inward and radially outward of the second planar coil 12 (the turn portion 12n) are defined in the same manner as the radially inward and radially outward directions of the first planar coil 11 described above. The position of the second center axis C2 is also defined in the same manner as the first center axis C1. The second planar coil 12 in this embodiment is also formed by punching a copper plate into a spiral shape, for example. However, the second planar coil 12 can also be formed by etching a copper foil into a spiral shape.

Here, in this embodiment, the thickness of the first planar coil 11 (the thickness of the conductor 11E) is larger than the thickness of the second planar coil 12. In other words, the thickness of the second planar coil 12 (the thickness of the conductor 12E) is smaller than the thickness of the first planar coil 11. The second planar coil 12 has a thickness of 0.15 mm or more and 0.35 mm or less.

The present inventor has found that, when the first planar coil 11 and the second planar coil 12 overlap, particularly when the first planar coil 11 and the second planar coil 12 overlap over the magnetic shield member 20 and the holding body 30, or over the holding body 30 that has magnetism, a phenomenon occurs in which the performance of the coil component 10 used in a predetermined frequency band is significantly improved by setting the thickness of the second planar coil 12 to 0.15 mm or more and 0.35 mm or less. Accordingly, the thickness of the second planar coil 12 is set to 0.15 mm or more and 0.35 mm or less. The predetermined frequency band mentioned above is a frequency band of the alternating current to be applied to the first planar coil 11, and specifically is 75 KHz or more and 100 KHz or less. The performance of the coil component 10 significantly improves particularly when the frequency band is 79 KHz or more and 90 KHz or less. When the coil component 10 is not used in the frequency band of 75 KHz or more and 100 KHz or less, a different thickness of the second planar coil 12 is preferred.

The radius of the second planar coil 12 (the distance from the second center axis C2 to the portion farthest therefrom in the radial direction) may be 80 mm or more, or may be 80 mm or more and 450 mm or less, as in the case of the first planar coil 11. Furthermore, the aspect ratio of the second planar coil 12 (the conductor 12E) having a rectangular sectional shape may be 2 or more and 12 or less, or 3 or more and 10 or less, as in the case of the first planar coil 11. The wire width of the second planar coil 12 (the wire width of the conductor 12E), that is, the radial width (the width in the radial direction) of each turn portion 12n may 2 mm or more and 20 mm or less, 2 mm or more and 16 mm or less, 2 mm or more and 12 mm or less, or 2 mm or more and 8 mm or less. The number of turns of the second planar coil 12 may be 2 or more and 12 or less, but is not particularly limited.

The first planar coil 11 and the second planar coil 12 overlap each other with a gap therebetween. The gap may be 0.5 mm or more and 1.5 mm or less. The dimension of the gap is not particularly limited, but too small a gap tends to increase the eddy current loss occurring in the first planar coil 11 and the second planar coil 12 when a current is supplied. Too large a gap hinders the thinning of the coil component 10.

The present inventor has confirmed through experiments and simulations that the phenomenon that the performance of the coil component 10 used in a predetermined frequency band is significantly improved by setting the thickness of the second planar coil 12 to 0.15 mm or more and 0.35 mm or less occurs at least when the above-described preconditions, i.e., the radial widths (2 mm to 20 mm) of the turn portions 11n and 12n and the number of turns (2 to 12) of the first planar coil 11 and the second planar coil 12, are met. However, the present disclosure is not limited to the conditions exemplified in the embodiment. Specifically, for example, the phenomenon that the performance of the coil component 10 used in a predetermined frequency band is significantly improved by setting the thickness of the second planar coil 12 to 0.15 mm or more and 0.35 mm or less can occur regardless of the dimensions, the number of turns, and the like.

### (Magnetic Shield Member)

The magnetic shield member 20 is provided for suppressing magnetic permeation and/or leakage magnetic field. The magnetic shield member 20 is a sheet-like member separate from the first planar coil 11, the second planar coil 12, and the holding body 30. The magnetic shield member 20 being separate from the first planar coil 11, the second planar coil 12, and the holding body 30 means that the magnetic shield member 20 is not integrated with the first planar coil 11, the second planar coil 12, or the holding body 30. However, the magnetic shield member 20 and the holding body 30 may be bonded to each other via an adhesive layer or the like. The magnetic shield member 20 is formed to have a size that encompasses the first planar coil 11 and the second planar coil 12 in plan view. The magnetic shield member 20 overlaps the first planar coil 11, the second planar coil 12, and the holding body 30 and is in direct contact with the holding body 30, among these components.

The magnetic shield member 20 in this embodiment has magnetism and includes or is made of a magnetic body. In the coil component 10, a magnetic field is generated when a current is supplied to the first planar coil 11 and the second planar coil 12. The magnetic field generated in the coil component 10 is generated so as to spread in all directions with respect to the center axes C1 and C2 of the first planar coil 11 and the second planar coil 12. At this time, because the magnetic shield member 20 has magnetism, the magnetic flux lines that are going to spread can be oriented toward the center axes C1 and C2. The coil component 10 may be installed in a vehicle. At this time, if a magnetic field generated by the coil component 10 flows to another vehicle component, the vehicle component may be adversely influenced. In such a case, the magnetic shield member 20 can suppress the leakage magnetic field that does not contribute to the generation of a current.

The magnetic shield member 20 preferably contains a soft magnetic material or a nanocrystalline magnetic material. More specifically, the magnetic shield member 20 contains ferrite, preferably soft ferrite. In this embodiment, the magnetic shield member 20 contains a plate-shaped ferrite. More specifically, the magnetic shield member 20 is formed by arranging multiple plate-shaped ferrite elements in a sheet.

The relative permeability of the magnetic shield member 20 may be 500 or more, or may be 1000 or more. The relative permeability of the magnetic shield member 20 may be 500 or more and 3000 or less, or 1000 or more and 3000 or less. The relative permeability in the present specification is a value measured at a frequency of 85 KHz and an ambient temperature of 23 °C.

### (Holding Body and Magnetic Member)

As illustrated in Fig. 4, the holding body 30, serving as a magnetic member in this embodiment, integrally holds the first planar coil 11 and the second planar coil 12. The holding body 30 covers a surface 111A of the first planar coil 11 facing the second planar coil 12 and a surface 111B on the opposite side from the surface 111A, and fills the gap between the first planar coil 11 and the second planar coil 12. Because the holding body 30 fills the gap between the first planar coil 11 and the second planar coil 12, the holding body 30 covers a surface 121B of the second planar coil 12 facing the first planar coil 11.

Meanwhile, the holding body 30 does not cover a surface 121A of the second planar coil 12 on the opposite side from the surface 121B facing the first planar coil 11. The holding body 30 includes a wall portion 35 that protrudes from the second planar coil 12 in the axial direction of the second planar coil 12. The wall portion 35 has a spiral shape when viewed in the axial direction of the second planar coil 12, and extends along the second planar coil 12.

As described above, the holding body 30 includes the first layer portion 31 covering the surface of the first planar coil 11 on the opposite side from the surface facing the second planar coil 12, and the second layer portion 32, the third layer portion 33, the fourth layer portion 34, and the wall portion 35 formed so as to be stacked from the first layer portion 31 toward the second planar coil 12. The holding body 30 is shaped so as to wrap the first planar coil 11 and the second planar coil 12 with the portions (31 to 35) formed as a single component without a joint, and integrally holds the first planar coil 11 and the second planar coil 12.

The first layer portion 31, the second layer portion 32, the third layer portion 33, and the fourth layer portion 34 are formed with dimensions that enclose the entire first planar coil 11 and the entire second planar coil 12 when viewed in the axial direction of the first planar coil 11 and the second planar coil 12. The first layer portion 31 is a portion that covers the surface 111B of the first planar coil 11 on the opposite side from the surface 111A facing the second planar coil 12 and is in contact with the magnetic shield member 20. The second layer portion 32 is a portion stacked on the first layer portion 31 and covers the side surfaces of the first planar coil 11. In other words, the second layer portion 32 is a portion that covers the entire side surfaces of the first planar coil 11 from radially inward and outward. The third layer portion 33 is a portion interposed between the first planar coil 11 and the second planar coil 12. Specifically, the third layer portion 33 is a portion that fills the gap between the first planar coil 11 and the second planar coil 12. The fourth layer portion 34 is a portion that covers the side surfaces of the second planar coil 12. In other words, the fourth layer portion 34 is a portion that covers the entire side surfaces of the second planar coil 12 from radially inward and outward. The surface of the fourth layer portion 34 on the opposite side from the surface joining the third layer portion 33 is flush with the surface 121A of the second planar coil 12. The wall portion 35 protrudes from the surface of the fourth layer portion 34 that is flush with the surface 121A of the second planar coil 12.

The holding body 30 is magnetic as a whole, that is, the first layer portion 31, the second layer portion 32, the third layer portion 33, the fourth layer portion 34, and the wall portion 35 are each magnetic. The holding body 30 with magnetism suppresses eddy current loss and leakage flux and increases a coupling coefficient to improve the coil performance. The relative permeability of the holding body 30 is preferably 2.0 or more, and may be 2.0 or more and 10.0 or less. The relative permeability of the holding body 30 is more preferably 5.0 or more, and may be 5.0 or more and 10.0 or less. The relative permeability of the holding body 30 is not particularly limited, but if it is too large, the flexibility and strength of the holding body 30 may be undesirably impaired. Hence, the relative permeability of the holding body 30 may be 200 or less.

In addition, the holding body 30 including the wall portion 35 can effectively improve the coil performance. The height of the wall portion 35 is not particularly limited, but may be, for example, 0.5 mm or more, or 1.0 mm or more. The higher the wall portion 35, the higher the eddy current loss suppression effect and the coupling coefficient tend to be. However, the wall portion 35 tends to be more easily damaged from the root as the height increases. Hence, the height of the wall portion 35 may be, for example, 10 mm or less. The wall portion 35 may be omitted.

The holding body 30 in this embodiment contains, for example, a resin and a plurality of or an infinite number of magnetic particles made of a magnetic material. The magnetic particles are held in the resin, serving as the holding material. The resin contained in the holding body 30 has an insulating property. The insulating property is defined as having a volume resistivity of 10¹⁰ Ω · m or greater.

The magnetic particles may be formed of any one or two or more of a ferrite, particularly a soft magnetic ferrite, a nanocrystalline magnetic material, silicon steel, electromagnetic soft iron, and an amorphous metal. The resin, serving as the holding material, may be a glass fiber reinforced polyamide. Specifically, the resin may be formed of a material containing polyamide, serving as a thermoplastic resin (thermoplastic material), and glass fiber. However, the material for forming the holding body 30 is not particularly limited.

### (Power Supply/Receiving Terminal)

As illustrated in Figs. 2 and 3, in this example, the power supply/receiving first terminal 51 is connected to the radially inner end of the turn portion 111 of the first planar coil 11. In this embodiment, the power supply/receiving first terminal 51 is provided so as to cross the plurality of turn portions 11n in the radial direction, but how the power supply/receiving first terminal 51 is led out is not particularly limited. In this example, the power supply/receiving second terminal 52 is connected to the radially outer end of the turn portion 115 of the first planar coil 11. For example, the power supply/receiving first terminal 51 and the power supply/receiving second terminal 52 can be used to connect to the high-frequency current supply part 1A or the conversion part 2A. The power supply/receiving first terminal 51 and the turn portion 111, and the power supply/receiving second terminal 52 and the turn portion 115 may be connected to each other by ultrasonic bonding. However, the connection method is not limited, and for example, connection using a conductive adhesive may be adopted. In this embodiment, the power supply/receiving first terminal 51 and the power supply/receiving second terminal 52 are connected to the one of the first planar coil 11 or the second planar coil 12 having the smaller inductance. In this embodiment, because the inductance of the first planar coil 11 is smaller than the inductance of the second planar coil 12, the power supply/receiving first terminal 51 and the power supply/receiving second terminal 52 are connected to the first planar coil 11.

### (Coupling Terminal and Capacitor)

As illustrated in Figs. 2 and 3, in this example, the coupling first terminal 61 is connected to the radially inner end of the turn portion 121 of the second planar coil 12. In this embodiment, the coupling first terminal 61 is provided so as to cross the plurality of turn portions 12n in the radial direction, but how the coupling first terminal 61 is led out is not particularly limited. In this example, the coupling second terminal 62 is connected to the radially outer end of the turn portion 130 of the second planar coil 12. As described above, the capacitor 70 is electrically connected to the coupling first terminal 61 and the coupling second terminal 62 to constitute a resonant circuit together with the second planar coil 12. Specifically, the capacitor 70 is electrically connected to the second planar coil 12 via the coupling first terminal 61 and the coupling second terminal 62, and constitutes a resonant circuit that is not directly or indirectly connected to the AC power supply or the battery (for example, the battery via the conversion part 2A) together with the second planar coil 12. In this embodiment, the coupling first terminal 61 and the coupling second terminal 62 are connected to the one of the first planar coil 11 or the second planar coil 12 having a higher inductance. In this embodiment, because the inductance of the second planar coil 12 is higher than the inductance of the first planar coil 11, the coupling first terminal 61 and the coupling second terminal 62 are connected to the second planar coil 12. In this embodiment, the capacitance of the capacitor 70 is set such that the resonant circuit composed of the second planar coil 12 and the capacitor 70 is in a resonant state in a range of 75 KHz or more and 100 KHz or less, or 79 KHz or more and 90 KHz or less. The capacitor 70 may be either a fixed capacitor or a variable capacitor. For example, when the first planar coil 11 and the second planar coil 12 have the same number of turns, there may be a case where the first planar coil 11 and the second planar coil 12 have the same inductance when considered individually. In such a case, the inductance of the first planar coil 11, which is closer to the first layer portion 31 of the holding body 30 or the magnetic shield member 20, which serve as magnetic members, is higher than that of the second planar coil 12. Hence, for example, when the first planar coil 11 and the second planar coil 12 have the same number of turns, the capacitor 70 is connected to the first planar coil 11 via the coupling first terminal 61 and the coupling second terminal 62.

### <Performance Evaluation Simulation of Coil Component 10>

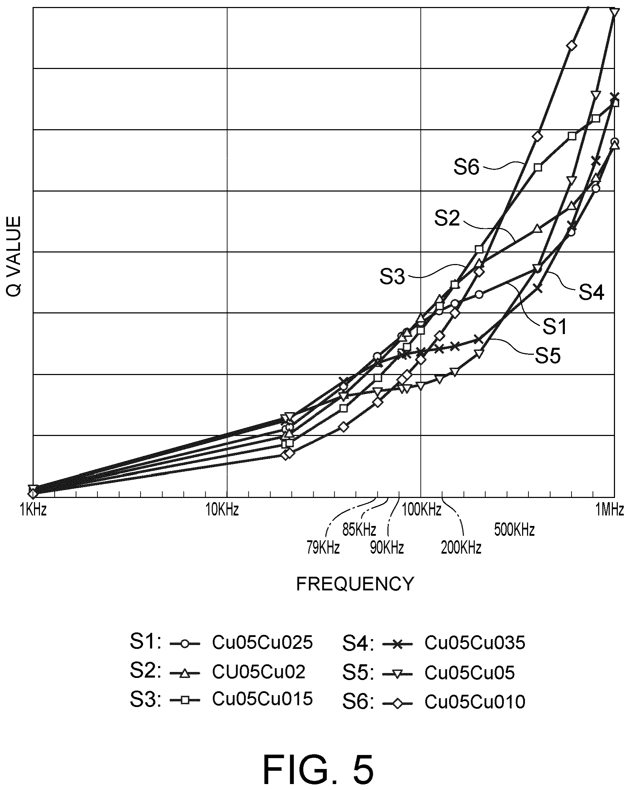

Hereinbelow, the results of performance evaluation of the coil component 10 according to this embodiment will be described. Fig. 5 is a graph illustrating the relationship between the thickness of the planar coils (11, 12) and the Q value in the coil component 10. In the performance evaluation described below, multiple values were set for the thickness of the first planar coil 11 and the thickness of the second planar coil 12, and the Q values were calculated by changing the frequency of the supply current. More specifically, the Q value were calculated from the simulation. The simulation was performed with Femtet (registered trademark) manufactured by Murata Software Co., Ltd.

In the simulation described below, in the coil component 10 according to the first embodiment described above, multiple values were set for the thickness of the first planar coil 11 and the thickness of the second planar coil 12, and the materials of the first planar coil 11 and the second planar coil 12 were set. Then, the Q values corresponding to the respective conditions were calculated for multiple frequencies. The Q values were calculated assuming a situation in which two identical coil components 10 are opposed and caused to transmit and receive power. In addition, the Q value of a coil component according to a comparative example of the first embodiment was calculated. The comparative example has the same configuration as the first embodiment except that the thickness of the second planar coil 12 assumed in the first embodiment, which is 0.15 mm or more and 0.35 mm or less, is not satisfied.

Individual conditions regarding the thickness and the material of the first planar coil 11 and the second planar coil 12 in the plurality of coil components to be simulated are as follows.

### Conditions in First Embodiment

· Condition 1: The first planar coil 11 is made of copper and has a thickness of 0.5 mm. The second planar coil 12 is made of copper and has a thickness of 0.25 mm (Cu05/Cu025).
· Condition 2: The first planar coil 11 is made of copper and has a thickness of 0.5 mm. The second planar coil 12 is made of copper and has a thickness of 0.20 mm (CuI05/Cu020).
· Condition 3: The first planar coil 11 is made of copper and has a thickness of 0.5 mm. The second planar coil 12 is made of copper and has a thickness of 0.15 mm (Cu05/Cu015).
· Condition 4: The first planar coil 11 is made of copper and has a thickness of 0.5 mm. The second planar coil 12 is made of copper and has a thickness of 0.35 mm (Cu05/Cu035).

### Conditions in Comparative Example of First Embodiment

· Condition 5: The first planar coil 11 is made of copper and has a thickness of 0.5 mm. The second planar coil 12 is made of copper and has a thickness of 0.5 mm (Cu05/Cu05).
· Condition 6: The first planar coil 11 is made of copper and has a thickness of 0.5 mm. The second planar coil 12 is made of copper and has a thickness of 0.1 mm (Cu05/Cu01).

The conditions in the comparative example do not exclude the conditions in the present disclosure, and the conditions in the comparative example may be a part of the present disclosure depending on the prerequisite frequency band of the current.

The common conditions in the simulation are as follows.
· The high-frequency current to be supplied is 40A and has a frequency of 85 KHz.
· The electrical conductivity of the first planar coil 11 formed of copper is 3.77 × 10⁷ [S/m]. · The electrical conductivity of the second planar coil 12 formed of copper is 3.77 × 10⁷ [S/m].
· The relative permeability of the magnetic shield member 20 is 3000, and the relative permeability of the holding body 30 is 5.0.
· An aluminum shield member that covers the magnetic shield member 20 from the opposite side from the side adjacent to the first planar coil 11 is further provided.
· The sizes (radial distances) of the first planar coil 11 and the second planar coil 12 are 350 mm × 350 mm.

In Fig. 5, line S1 indicates the result under Condition 1 (Cu05/Cu025), line S2 indicates the result under Condition 2 (Cu0.5/Cu02), line S3 indicates the result under Condition 3 (Cu05/Cu015), line S4 indicates the result under Condition 4 (Cu05/Cu035), line S5 indicates the result under Condition 5 (Cu05/Cu05), and line S6 indicates the result under Condition 6 (Cu05/Cu01).

Referring to Fig. 5, for example, when the frequency of the supplied current is in the range of 79 KHz to 100 KHz, the Q values under Conditions 1 to 4, in which the thicknesses of the second planar coil are 0.25 mm, 0.20 mm, 0.15 mm, and 0.35 mm, are higher than those under Conditions 5 and 6 by approximately 50 or more. The results in Fig. 5 demonstrate that the performance of the coil component 10 according to the first embodiment can be significantly improved when alternating current or an AC magnetic field at 75 KHz or more and 100 KHz or less, or 79 KHz or more and 90 KHz or less, particularly 85 KKz, is supplied.

For example, the Q value under Condition 1 (Cu05/Cu025) is 269, and the Q value under Condition 5 (Cu05/Cu05) is 178. This result indicates that the coil component 10 under Condition 1 according to this embodiment can ensure a higher Q value than the coil component 10 under Condition 5 with reduced amount of conductive material compared to Condition 5. Table 1 below shows detailed evaluation results under Conditions 1 and 5. The loss under Condition 1 is lower than that under Comparative Condition 1, which is considered to contribute to ensuring a high Q value. The loss in the magnetic shield in Table 1 below means the loss in the aluminum shield member added as a condition in the simulation.

**[Table 1]**

| | COIL THICKNESS (mm) | Q VALUE | LOSS (W) | | | | RESISTANCE @85 kHz(Q) | |
|---|---|---|---|---|---|---|---|---|
| | | | MAGNETIC SHIELD | FIRST PLANAR COIL | SECOND PLANAR COIL | TOTAL | FIRST PLANAR COIL | SECOND PLANAR COIL |
| CONDITION 1 (FIRST EMBODIMENT) | 050/025 | 269 | 21.9 | 69.5 | 31.0 | 122.6 | 0.037 | 0.137 |
| COMPARISON: CONDITION 5 | 050/050 | 178 | 21.6 | 132.4 | 31.2 | 185.3 | 0.062 | 0.128 |

Although the results in Fig. 5 are the evaluation results for the case where the coil component 10 is supplied with alternating current to generate a magnetic field, the coil component 10 exhibits the same good performance also when the coil component 10 is supplied with an AC magnetic field to generate alternating current.

Table 2 below shows the results of simulating, under the same conditions as the above-described simulation, the performance of a coil component 10 under Condition 1 with the first planar coil 11 and the second planar coil 12 being made slightly smaller. Table 2 below shows the results regarding the Q value, the losses, the impedance (Ω) and inductance (H) at each coil, and the coupling coefficients between the transmission-side and receiving-side coils. Under the header "COUPLING COEFFICIENT", K1-2 corresponds to the coupling coefficient between the first planar coil 11 and the second planar coil 12 in the transmission-side coil component 10, K1-3 corresponds to the coupling coefficient between the first planar coil 11 in the transmission-side coil component 10 and the second planar coil 12 in the receiving-side coil component 10, K1-4 corresponds to the coupling coefficient between the first planar coil 11 in the transmission-side coil component 10 and the first planar coil 11 in the receiving-side coil component 10, K2-3 corresponds to the coupling coefficient between the second planar coil 12 in the transmission-side coil component 10 and the second planar coil 12 in the receiving-side coil component 10, K2-4 corresponds to the coupling coefficient between the second planar coil 12 in the transmission-side coil component 10 and the first planar coil 11 in the receiving-side coil component 10, and K3-4 corresponds to the coupling coefficient between the second planar coil 12 in the receiving-side coil component 10 and the first planar coil 11 in the receiving-side coil component 10.

**[Table 2]**

| | | |
|---|---|---|
| Q VALUE | | 251 |
| LOSS (W) | MAGNETIC SHIELD | 58.3 |
| | FIRST PLANAR COIL | 86.5 |
| | SECOND PLANAR COIL | 34.3 |
| | TOTAL | 179.1 |
| IMPEDANCE (Ω) | FIRST PLANAR COIL | 0.039 |
| | SECOND PLANAR COIL | 0.148 |
| INDUCTANCE | FIRST PLANAR COIL | 14.9 |
| | SECOND PLANAR COIL | 48.6 |
| COUPLING COEFFICIENT | K1-2 | 0.89 |
| | K1-3 | 0.33 |
| | K1-4 | 0.30 |
| | K2-3 | 0.30 |
| | K2-4 | 0.27 |
| | K3-4 | 0.89 |

The above-described coil component 10 according to this embodiment includes the first planar coil 11, the second planar coil 12 that overlaps the first planar coil 11 and is not connected to the first planar coil 11, and the capacitor 70 that is connected to the second planar coil 12 and constitutes a resonant circuit together with the second planar coil 12. The second planar coil 12 has a thickness of 0.15 mm or more and 0.35 mm or less.

The coil component 10 according to this embodiment can improve the performance while suppressing an increase in size and weight. Typically, it is presumed that the coil performances, such as the Q value of the coil, tend to be improved as the thickness of the coil increases. However, the present inventor has found through intensive studies that such a tendency does not necessarily present in a configuration in which planar coils overlap each other, particularly in a configuration in which planar coils overlap each other over a magnetic member. The present inventor has found that, in a configuration in which the first planar coil 11 and the second planar coil 12 are stacked in this order, particularly in a configuration in which the first planar coil 11 and the second planar coil 12 overlap over the magnetic shield member 20 and the holding body 30 or over the holding body 30 having magnetism, when alternating current or an AC magnetic field in a predetermined frequency band (75 to 100 KHz, particularly 79 to 90 KHz) is supplied, the Q value is significantly improved when the second planar coil 12 has a thickness of 0.15 mm or more and 0.35 mm or less, regardless of the thickness of the first planar coil 11. This finding revealed that the performance of the coil component 10 can be improved by using the second planar coil 12 having a thickness of 0.25 mm rather than the second planar coil 12 having a thickness of 0.5 mm, for example.

Specifically, in the coil component 10 based on this finding, the thickness of the second planar coil 12 can be reduced by setting the thickness of the second planar coil 12 to 0.15 mm or more and 0.35 mm or less. The performance of the coil component 10 can be improved as much as possible when the coil component 10 is used in a predetermined frequency band (75 to 100 KHz, particularly 79 to 90 KHz). This can improve the performance of the coil component 10 while suppressing an increase in the overall size and weight of the coil component 10. The phenomenon that, in the configuration in which the first planar coil 11 and the second planar coil 12 are stacked in this order, when alternating current or an AC magnetic field in a predetermined frequency band is supplied, the Q value is significantly improved when the second planar coil 12 has a thickness of 0.15 mm or more and 0.35 mm or less regardless of the thickness of the first planar coil 11 is difficult to predict from common technical knowledge. The coil component created based on this phenomenon is believed to have a remarkable effect of greatly contributing to improvement in performance of the coil component.

In addition, in the case where the thickness of the second planar coil 12 is set to 0.15 mm or more and 0.35 mm or less as described above, it is preferable that the first planar coil 11 has a thickness of 0.1 mm or more and 1.0 mm or less. With this configuration, the coil component 10 can be formed to be extremely thin and lightweight while satisfying the performance required in, for example, contactless power transfer of relatively high power. Hence, the coil component 10 having extremely excellent practicality can be provided.

The gap between the first planar coil 11 and the second planar coil 12 facing each other without another coil interposed therebetween may be 0.5 mm or more and 2.0 mm or less, or may be 0.5 mm or more and 1.5 mm or less. This configuration can effectively improve the performance of the coil component 10 without inhibiting the reduction in thickness.

Furthermore, in this embodiment, the holding body 30 having magnetism includes a portion (the first layer portion 31) that covers the surface of the first planar coil 11 on the opposite side from the surface facing the second planar coil 12. When such a magnetic member is provided, the leakage and proximity effect of the magnetic field are suppressed by the holding body 30, which improves the performance of the coil component 10. In this example, the holding body 30 includes a resin and magnetic particles held in the resin. In this case, the bonding strength between the resin and the first planar coil 11 and the second planar coil 12 can be improved, thus enabling stable integration of the first planar coil 11 and the second planar coil 12.

The relative permeability of the holding body 30 may be 5.0 or more. In this case, the performance of the coil component can be improved by the magnetic permeability of the holding body 30. The relative permeability of the holding body 30 may be 10.0 or less. In this case, the strength of the holding body 30 can be appropriately ensured, and the coupling state between the holding body 30 and each of the planar coils 11 and 12 can be strengthened.

The holding body 30 in this embodiment includes the wall portion 35 protruding from the second planar coil 12. This configuration can effectively improve the transfer efficiency of the magnetic flux transmitted from the coil component 10 or received from another coil component.

In this embodiment, at least one of the plurality of turn portions 11n of the first planar coil 11 and at least one of the plurality of turn portions 12n of the second planar coil 12 at least partially overlap each other in the axial direction of the first planar coil 11. The turn portion 11n of the first planar coil 11 and the turn portion 12n of the second planar coil 12 that overlap each other in the axial direction of the first planar coil 11 extend at least partially parallel to each other. This configuration can effectively improve the performance of the coil component 10. It is presumed that the improvement of the coil performance with this configuration is achieved by suppressing an eddy current loss or the like that may occur between the first planar coil 11 and the second planar coil 12.

### <<Second Embodiment>>

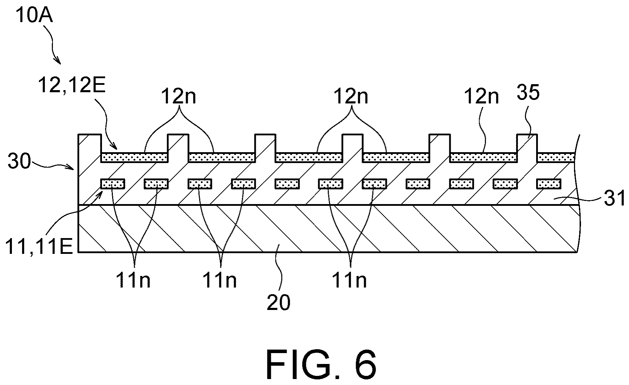

Next, a coil component 10A according to a second embodiment will be described with reference to Fig. 6. In this embodiment, the same components as those in the first embodiment are denoted by the same reference numerals, and the description thereof will be omitted.

In the coil component 10A according to the second embodiment illustrated in Fig. 6, the number of turns of the first planar coil 11 is larger than the number of turns of the second planar coil 12. More specifically, the number of turns of the first planar coil 11 is 10, and the number of turns of the second planar coil 12 is five. This means that the number of the plurality of turn portions 11n of the first planar coil 11 is twice the number of the plurality of turn portions 12n of the second planar coil 12. The inductance of the first planar coil 11 is higher than the inductance of the second planar coil 12. The capacitor 70 is connected to the first planar coil 11 via the coupling first terminal 61 and the coupling second terminal 62. The capacitor 70 constitutes, together with the first planar coil 11, a resonant circuit that is not directly or indirectly connected to an AC power supply or a battery (for example, a battery via the conversion part 2A). Meanwhile, the power supply/receiving first terminal 51 and the power supply/receiving second terminal 52 are connected to the second planar coil 12. The second planar coil 12 may be connected to, for example, the high-frequency current supply part 1A or the conversion part 2A via the power supply/receiving first terminal 51 and the power supply/receiving second terminal 52.

Also in this embodiment, at least one of the plurality of turn portions 11n of the first planar coil 11 and at least one of the plurality of turn portions 12n of the second planar coil 12 at least partially overlap each other in the axial direction of the first planar coil 11. The turn portion 11n of the first planar coil 11 and the turn portion 12n of the second planar coil 12 that overlap each other in the axial direction of the first planar coil 11 extend at least partially parallel to each other with the same winding directions.

More specifically, the turn portion 12n of the second planar coil 12 that is the m-th (m is an integer from 1 to 5, which is the number of turns of the second planar coil 12) as counted from the center of the second planar coil 12 at least partially overlap, in the axial direction of the first planar coil 11, and at least partially extend parallel to the turn portion 11n of the first planar coil 11 that is the ((2 × m) - 1)-th as counted from the center of the first planar coil 11 and the turn portion 11n of the first planar coil 11 that is the (2 × m)- th as counted from the center of the first planar coil 11. Furthermore, the turn portions 11n of the first planar coil 11 and the turn portion 12n of the second planar coil 12 that overlap each other in the axial direction of the first planar coil 11 and extend parallel to each other do not protrude beyond each other in the radial direction.

The coil component 10A according to this embodiment also has a tendency similar to the tendency of the relationship between the frequency of the supplied current and the Q value described with reference to Fig. 5. Hence, also in this embodiment, the thickness of the second planar coil 12 is set to 0.15 mm or more and 0.35 mm or less. With this setting, the coil component 10A is configured such that the performance thereof is significantly improved when alternating current at 75 KHz or more and 100 KHz or less, 79 KHz or more and 90 KHz or less, or 85 KHz is supplied, or when an AC magnetic field at 75 KHz or more and 100 KHz or less, 79 KHz or more and 90 KHz or less, or 85 KHz is supplied. Specifically, when actually used, the coil component 10A is also applied to the power transfer system S illustrated in Fig. 1, for example, and is configured to receive the supply of alternating current at 75 KHz or more and 100 KHz or less, or 79 KHz or more and 90 KHz or less, or an AC magnetic field at 75 KHz or more and 100 KHz or less, or 79 KHz or more and 90 KHz or less as in the case of the coil component 10 described above. With this configuration, the coil component 10A exhibits a useful function.

Table 3 below shows the results of simulating the performance of the coil component 10A under the same conditions as those of the simulation described in the first embodiment. The items shown in Table 3 are the same as those in Table 2 described above.

**[Table 3]**

| | | |
|---|---|---|
| Q VALUE | | 201 |
| LOSS (W) | MAGNETIC SHIELD | 59.0 |
| | FIRST PLANAR COIL | 32.7 |
| | SECOND PLANAR COIL | 125.4 |
| | TOTAL | 217.1 |
| IMPEDANCE (Ω) | FIRST PLANAR COIL | 0.185 |
| | SECOND PLANAR COIL | 0.039 |
| INDUCTANCE | FIRST PLANAR COIL | 57.8 |
| | SECOND PLANAR COIL | 11.9 |
| COUPLING COEFFICIENT | K1-2 | 0.89 |
| | K1-3 | 0.30 |
| | K1-4 | 0.27 |
| | K2-3 | 0.33 |
| | K2-4 | 0.30 |
| | K3-4 | 0.89 |

In this second embodiment, the number of the plurality of turn portions 11n of the first planar coil 11 is twice the number of the plurality of turn portions 12n of the second planar coil 12. In contrast, in the first embodiment, the number of the plurality of turn portions 11n of the first planar coil 11 is half the number of the plurality of turn portions 12n of the second planar coil 12. However, the relationship between the number of turns of the first planar coil 11 and the number of turns of the second planar coil 12 may be other than 1:2 or 2:1. For example, the number of turns of the first planar coil 11 may be 7, and the number of turns of the second planar coil 12 may be 10. The difference in the number of turns between the first planar coil 11 and the second planar coil 12 causes a difference in the performance of the coil component. However, when alternating current at 75 KHz or more and 100 KHz or less, 79 KHz or more and 90 KHz or less, or 85 KHz, or an AC magnetic field at 75 KHz or more and 100 KHz or less, 79 KHz or more and 90 KHz or less, or 85 KHz is supplied to the coil component, the condition that the second planar coil 12 has a thickness of 0.15 mm or more and 0.35 mm or less is effective regardless of the condition of the number of turns.

### <<Third Embodiment>>

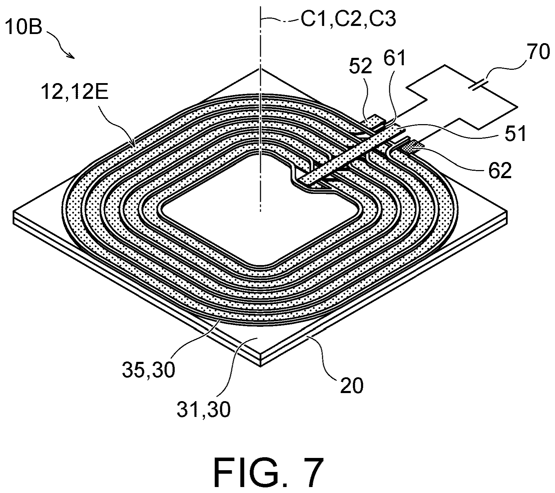

Next, a coil component 10B according to a third embodiment will be described with reference to Figs. 7 to 9. In this embodiment, the same components as those in the first and second embodiments are denoted by the same reference numerals, and the description thereof will be omitted.

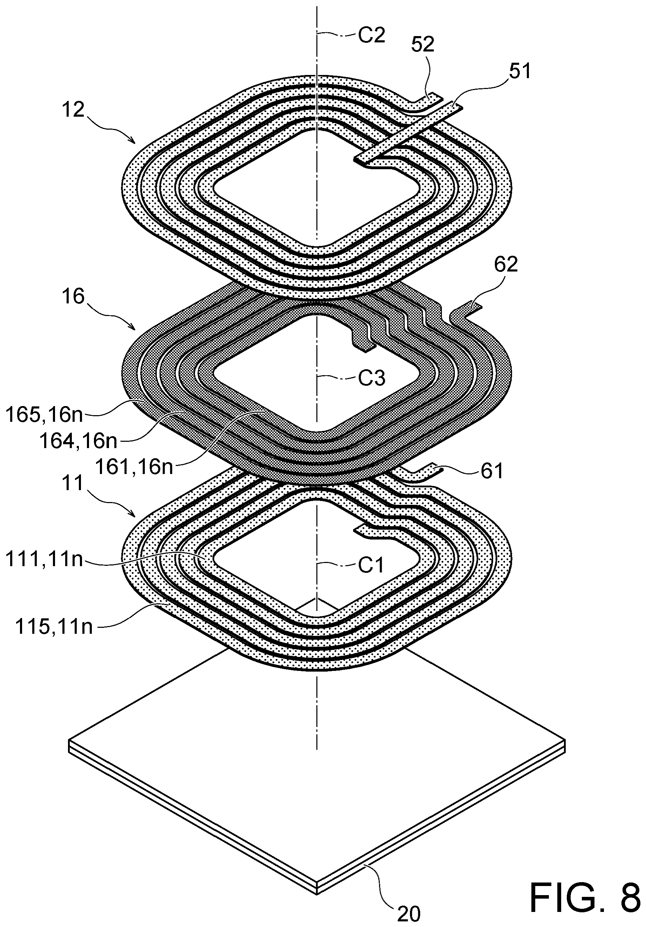

The coil component 10B according to the third embodiment illustrated in Figs. 7 to 9 further includes a first additional planar coil 16 in addition to the first planar coil 11, the second planar coil 12, the magnetic shield member 20, and the holding body 30 described in the first embodiment. In this embodiment, a single first additional planar coil 16 is disposed between the first planar coil 11 and the second planar coil 12. In other words, the coil component 10B includes three overlapping planar coils. In Fig. 8, the holding body 30 is not illustrated for convenience of description.

Referring to Fig. 8, the first additional planar coil 16 is connected in series to the first planar coil 11 and is not connected to the second planar coil 12. The first additional planar coil 16 has a plate-like spiral shape and has a conductor with a rectangular cross-section, similarly to the first planar coil 11 and the second planar coil 12. The first additional planar coil 16 has a conductor 16E including a plurality of turn portions 16n arranged in a radial direction from the center axis (hereinbelow, a third center axis C3) of the first additional planar coil 16. How the plurality of turn portions 16n are connected and the names thereof, such as the turn portion 161, etc., depending on the position are the same as those of the turn portions 11n of the first planar coil 11. In this embodiment, the plurality of turn portions 16n include five turn portions 161 to 165. The number of the plurality of turn portions 16n is the same as the number of the turn portions 11n of the first planar coil 11, but the number of the turn portions 16n may be larger or smaller than that of the turn portions 11n. The number of turns of the second planar coil 12 is five, which is different from that in the first embodiment, but the number of turns of the second planar coil 12 may be 10, and other forms are also possible. In this example, the first additional planar coil 16 is formed of copper, but may be formed of a copper alloy, aluminum, an aluminum alloy, or the like.

The radially inner end of the turn portion 161 of the first additional planar coil 16, which is the closest to the third center axis C3, is connected to the radially inner end of the turn portion 111 of the first planar coil 11, which is the closest to the first center axis C1. When the first planar coil 11 and the first additional planar coil 16 are connected to each other, the winding direction of the first planar coil 11 from the end not connected to the first additional planar coil 16 (i.e., the radially outer end of the turn portion 115) to the end connected to the first additional planar coil 16 is the same as the winding direction of the first additional planar coil 16 from the end connected to the first planar coil 11 to the end not connected to the first planar coil 11 (i.e., the radially outer end of the turn portion 165).

In this embodiment, the power supply/receiving first terminal 51 is connected to the radially inner end of the turn portion 121 of the second planar coil 12. The power supply/receiving second terminal 52 is connected to the radially outer end of the turn portion 125 of the second planar coil 12. Meanwhile, the coupling first terminal 61 is connected to the radially outer end of the turn portion 115 of the first planar coil 11. The coupling second terminal 62 is connected to the radially outer end of the turn portion 165, which is the farthest from the first center axis C1, of the first additional planar coil 16. The capacitor 70 is connected to the first planar coil 11 and the first additional planar coil 16 via the coupling first terminal 61 and the coupling second terminal 62 to form a resonant circuit. This resonant circuit is a closed circuit that forms a closed loop without being directly or indirectly connected to an AC power supply or a battery (for example, a battery via the conversion part 2A).

In this embodiment, at least one of the plurality of turn portions 11n of the first planar coil 11 and at least one of the plurality of turn portions 16n of the first additional planar coil 16 at least partially overlap each other in the axial direction of the first planar coil 11. The turn portion 11n of the first planar coil 11 and the turn portion 16n of the first additional planar coil 16 that overlap each other in the axial direction of the first planar coil 11 extend at least partially parallel to each other with the same winding directions. The turn portion 11n of the first planar coil 11 and the turn portion 16n of the first additional planar coil 16 that overlap each other in the axial direction of the first planar coil 11 and extend parallel to each other do not protrude beyond each other in the radial direction. In addition, at least one of the turn portions 16n of the first additional planar coil 16 and at least one of the plurality of turn portions 12n of the second planar coil 12 at least partially overlap each other in the axial direction of the first additional planar coil 16. The turn portion 16n of the first additional planar coil 16 and the turn portion 12n of the second planar coil 12 that overlap each other in the axial direction of the first additional planar coil 16 extend at least partially parallel to each other with the same winding directions. The turn portion 16n of the first additional planar coil 16 and the turn portion 12n of the second planar coil 12 that overlap each other in the axial direction of the first additional planar coil 16 and extend parallel to each other do not protrude beyond each other in the radial direction. In addition, at least one of the plurality of turn portions 11n of the first planar coil 11 and at least one of the plurality of turn portions 12n of the second planar coil 12 at least partially overlap each other in the axial direction of the first planar coil 11. The turn portion 11n of the first planar coil 11 and the turn portion 12n of the second planar coil 12 that overlap each other in the axial direction of the first planar coil 11 extend at least partially parallel to each other with the same winding directions. The turn portion 11n of the first planar coil 11 and the turn portion 12n of the second planar coil 12 that overlap in the axial direction of the first planar coil 11 and extend parallel to each other do not protrude beyond each other in the radial direction.

Also in this embodiment, the second planar coil 12 has a thickness of 0.15 mm or more and 0.35 mm or less. Furthermore, the first additional planar coil 16 also has a thickness of 0.15 mm or more and 0.35 mm or less. The present inventor has found that, also in the case where the first planar coil 11, the first additional planar coil 16, and the second planar coil 12 overlap and a magnetic field is generated in the first planar coil 11 and the first additional planar coil 16 connected in series by alternating current at 75 KHz or more and 100 KHz or less, 79 KHz or more and 90 KHz or less, or 85 KHz supplied to the second planar coil 12, it is effective to set the thickness of the second planar coil 12 to 0.15 mm or more and 0.35 mm or less, and furthermore, the performance of the coil component 10B is further improved by setting the thickness of the first additional planar coil 16 to 0.15 mm or more and 0.35 mm or less. Also in the case where an AC magnetic field at 75 KHz or more and 100 KHz or less, 79 KHz or more and 90 KHz or less, or 85 KHz is supplied, the configuration is effective in which the second planar coil 12 has a thickness of 0.15 mm or more and 0.35 mm or less and the first additional planar coil 16 has a thickness of 0.15 mm or more and 0.35 mm or less.

Meanwhile, the first planar coil 11 may have a thickness of, for example, 0.1 mm or more and 1.0 mm or less. In this embodiment, the thickness of the first planar coil 11 is not particularly limited, and it is important that the second planar coil 12 has a thickness of 0.15 mm or more and 0.35 mm or less, and the first additional planar coil 16 has a thickness of 0.15 mm or more and 0.35 mm or less. The gap between the first planar coil 11 and the first additional planar coil 16 facing each other without another coil interposed therebetween may be 0.5 mm or more and 2.0 mm or less, or may be 0.5 mm or more and 1.5 mm or less. The gap between the first planar coil 11 and the first additional planar coil 16 mentioned here is intended to be a gap between portions excluding a portion extending at an angle with an axial component and connecting the first planar coil 11 and the first additional planar coil 16. The gap between the second planar coil 12 and the first additional planar coil 16 facing each other without another coil interposed therebetween may be 0.5 mm or more and 2.0 mm or less, or 0.5 mm or more and 1.5 mm or less.

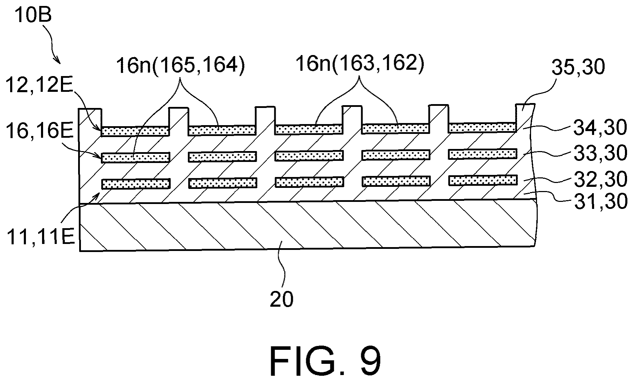

As illustrated in Fig. 9, in the holding body 30, the first additional planar coil 16 is covered with the third layer 33, which fills the space between the first planar coil 11 and the second planar coil 12. The dimension of the gap in the axial direction between the first planar coil 11 and the first additional planar coil 16 may be 0.5 mm or more and 1.5 mm or less. The dimension of the gap in the axial direction between the first additional planar coil 16 and the second planar coil 12 may be 0.5 mm or more and 1.5 mm or less.

Table 4 below shows the results of evaluating the performance with the configuration in which the thickness of the first planar coil 11 is set to 0.5 mm, the thickness of the first additional planar coil 16 is set to 0.25 mm, and the thickness of the second planar coil 12 is set to 0.25 mm, through a simulation under the same conditions as the simulation described in the first embodiment above. Table 4 below shows the Q value, the loss (the loss in the additional magnetic shield member made of aluminum, and the losses in the coils 11, 16, and 12), and the resistance (the coils 11, 16, and 12) of the coil component 10B calculated by the simulation.

**[Table 4]**

| | COIL THICKNESS (mm) | Q VALUE | LOSS (W) | | | | RESISTANCE @85 kHz(Q) | |
|---|---|---|---|---|---|---|---|---|
| | | | MAGNETIC SHIELD | FIRST PLANAR COIL + ADDITIONAL COIL | SECOND PLANAR COIL | TOTAL | FIRST PLANAR COIL + ADDITIONAL COIL | SECOND PLANAR COIL |
| THIRD EMBODIMENT | 050/025/025 | 339 | 50.5 | 23.0 | 74.5 | 148.0 | 0.121 | 0.033 |

According to the results in Table 4, the Q value of the coil component 10B is 339. The Q value of the coil component 10 according to the first embodiment described above is 269 under the same conditions. This results demonstrate that the Q value can be significantly increased by adding a planar coil having a thickness of 0.25 mm to the first planar coil 11 and the second planar coil 12.

Table 5 below shows the impedances (Ω) and the inductances of the coils and the coupling coefficients between the transmission-side and receiving-side coils in the coil component 10B, calculated at the same time in the simulation for obtaining the Q value. Under the header "COUPLING COEFFICIENT", K1-2 corresponds to the coupling coefficient between the pair of first planar coil 11 and first additional planar coil 16 and the second planar coil 12 in the transmission-side coil component 10, K1-3 corresponds to the coupling coefficient between the pair of first planar coil 11 and first additional planar coil 16 in the transmission-side coil component 10 and the second planar coil 12 in the receiving-side coil component 10, K1-4 corresponds to the coupling coefficient between the pair of first planar coil 11 and first additional planar coil 16 in the transmission-side coil component 10 and the pair of first planar coil 11 and first additional planar coil 16 in the receiving-side coil component 10, K2-3 corresponds to the coupling coefficient between the second planar coil 12 in the transmission-side coil component 10 and the second planar coil 12 in the receiving-side coil component 10, K2-4 corresponds to the coupling coefficient between the second planar coil 12 in the transmission-side coil component 10 and the pair of first planar coil 11 and first additional planar coil 16 in the receiving-side coil component 10, and K3-4 corresponds to the coupling coefficient between the second planar coil 12 in the receiving-side coil component 10 and the pair of first planar coil 11 and first additional planar coil 16 in the receiving-side coil component 10.

**[Table 5]**

| | | |
|---|---|---|
| IMPEDANCE (Ω) | FIRST PLANAR COIL + ADDITIONAL COIL | 0.121 |
| | SECOND PLANAR COIL | 0.033 |
| INDUCTANCE | FIRST PLANAR COIL + ADDITIONAL COIL | 75.2 |
| | SECOND PLANAR COIL | 13.0 |
| COUPLING COEFFICIENT | K1-2 | 0.80 |
| | K1-3 | 0.29 |
| | K1-4 | 0.24 |
| | K2-3 | 0.36 |
| | K2-4 | 0.29 |
| | K3-4 | 0.80 |

A plurality of first additional planar coils 16 may be provided between the first planar coil 11 and the second planar coil 12. In this case, the thickness of each first additional planar coil 16 is set to 0.15 mm or more and 0.35 mm or less under the condition that alternating current at 75 KHz or more and 100 KHz or less, 79 KHz or more and 90 KHz or less, or 85 KHz, or an AC magnetic field at 75 KHz or more and 100 KHz or less, 79 KHz or more and 90 KHz or less, or 85 KHz is supplied. This improves the performance of the coil component.

### <<Fourth Embodiment>>

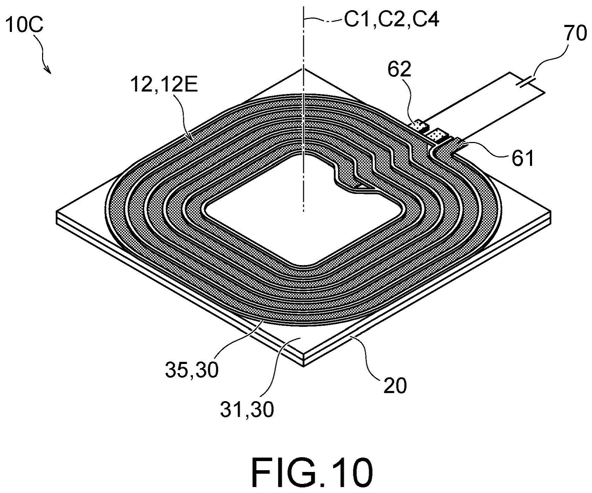

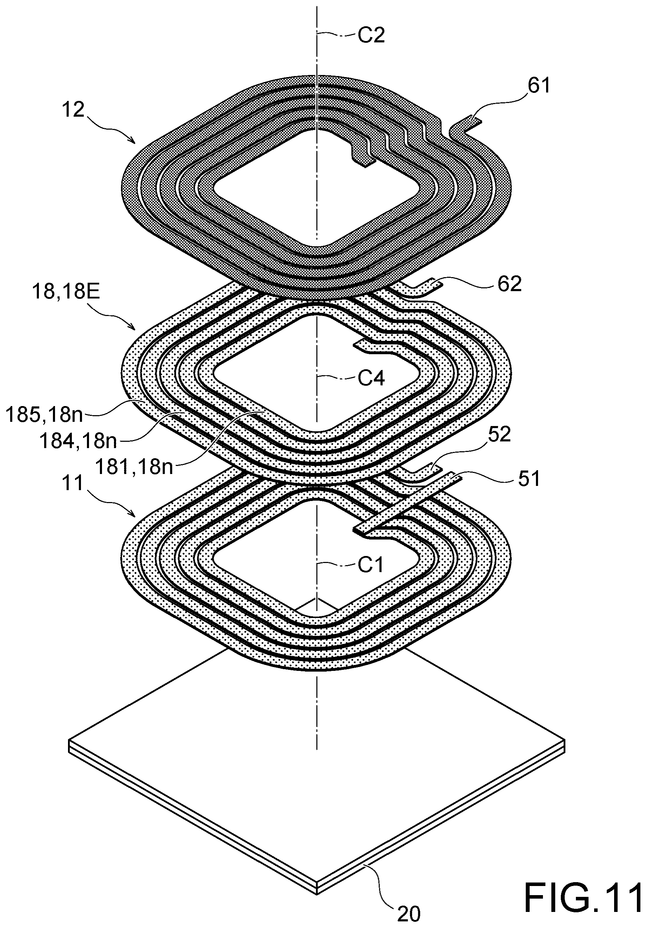

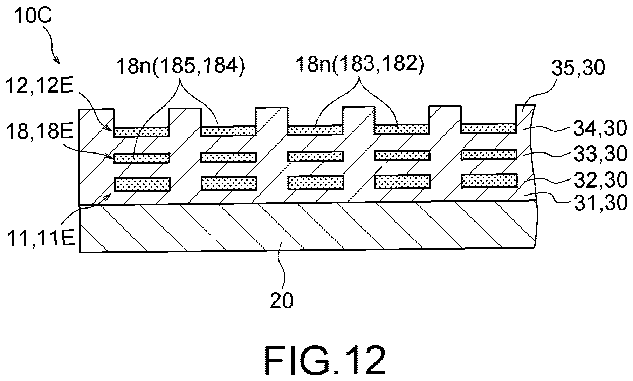

Next, a coil component 10C according to a fourth embodiment will be described with reference to Figs. 10 to 12. In this embodiment, the same components as those in the first to third embodiments are denoted by the same reference numerals, and the description thereof will be omitted. In Fig. 1, the holding body 30 is not illustrated for convenience of description.

The coil component 10C according to the fourth embodiment illustrated in Figs. 10 to 12 further includes a second additional planar coil 18 in addition to the first planar coil 11, the second planar coil 12, the magnetic shield member 20, and the holding body 30 described in the first embodiment. In this embodiment, a single second additional planar coil 18 is disposed between the first planar coil 11 and the second planar coil 12. Note that the second additional planar coil 18 is connected in series to the second planar coil 12 and is not connected to the first planar coil 11. The capacitor 70 is connected to the second planar coil 12 and the second additional planar coil 18 via the coupling first terminal 61 and the coupling second terminal 62 to form a resonant circuit. This resonant circuit is a closed circuit that forms a closed loop without being directly or indirectly connected to an AC power supply or a battery (for example, a battery via the conversion part 2A). In this example, the second additional planar coil 18 is formed of copper, but may be formed of a copper alloy, aluminum, an aluminum alloy, or the like.

The second additional planar coil 18 has a conductor 18E including a plurality of turn portions 18n arranged in the radial direction from the center axis (hereinbelow, a fourth center axis C4) of the second additional planar coil 18. How the plurality of turn portions 18n are connected and the names thereof, such as the turn portion 181, etc., depending on the position are the same as those of the turn portions 11n of the first planar coil 11. In this embodiment, the plurality of turn portions 18n include five turn portions 181 to 185. The number of the plurality of turn portions 18n is the same as the number of the turn portions 12n of the second planar coil 12, but the number of the turn portions 18n may be larger or smaller than that of the turn portions 12n. The number of turns of the first planar coil 11 is five, but another configuration is also possible. The configuration of the first planar coil 11 is the same as that of the first embodiment.

In this embodiment, the coupling first terminal 61 is connected to the radially outer end of the turn portion 185, which is the farthest from the second center axis C2, of the second planar coil 12. The coupling second terminal 62 is connected to the radially outer end of the turn portion 185, which is the farthest from the fourth center axis C4, of the second additional planar coil 18. The capacitor 70 is connected to the second planar coil 12 via the coupling first terminal 61 and the coupling second terminal 62, and constitutes a resonant circuit together with the second planar coil 12. The other configurations, such as the connection form between the second planar coil 12 and the second additional planar coil 18 and the shapes thereof, are the same as the relationship between the first planar coil 11 and the first additional planar coil 16 described in the third embodiment, and thus, the description thereof will be omitted. In a strict sense, the direction in which the second planar coil 12 is wound (counterclockwise) in this embodiment is opposite to the direction in which the second planar coil 12 is wound (clockwise) in the third embodiment. However, this difference does not cause an essential difference in the functions of the two.

Also in this embodiment, the second planar coil 12 has a thickness of 0.15 mm or more and 0.35 mm or less. Furthermore, the second additional planar coil 18 also has a thickness of 0.15 mm or more and 0.35 mm or less. The present inventor has found that, also in the case where the first planar coil 11, the second additional planar coil 18, and the second planar coil 12 overlap and a magnetic field is generated in the first planar coil 11 by alternating current at 75 KHz or more and 100 KHz or less, 79 KHz or more and 90 KHz or less, or 85 KHz and, in response thereto, a magnetic field is generated in the second additional planar coil 18 and the second planar coil 12 connected in series, it is effective to set the thickness of the second planar coil 12 to 0.15 mm or more and 0.35 mm or less, and furthermore, the performance of the coil component 10C is further improved by setting the thickness of the second additional planar coil 18 to 0.15 mm or more and 0.35 mm or less. Also in the case where an AC magnetic field at 75 KHz or more and 100 KHz or less, 79 KHz or more and 90 KHz or less, or 85 KHz is supplied, the configuration is effective in which the second planar coil 12 has a thickness of 0.15 mm or more and 0.35 mm or less and the second additional planar coil 18 has a thickness of 0.15 mm or more and 0.35 mm or less.

Meanwhile, the first planar coil 11 may have a thickness of, for example, 0.1 mm or more and 1.0 mm or less. Also in this embodiment, the thickness of the first planar coil 11 is not particularly limited, and it is important that the second planar coil 12 has a thickness of 0.15 mm or more and 0.35 mm or less, and the second additional planar coil 18 has a thickness of 0.15 mm or more and 0.35 mm or less. The configuration of the holding body 30 is the same as that of the third embodiment. The gap between the first planar coil 11 and the second additional planar coil 18 facing each other without another coil interposed therebetween may be 0.5 mm or more and 2.0 mm or less, or may be 0.5 mm or more and 1.5 mm or less. The gap between the second planar coil 12 and the second additional planar coil 18 facing each other without another coil interposed therebetween may be 0.5 mm or more and 2.0 mm or less, or may be 0.5 mm or more and 1.5 mm or less. The gap between the second planar coil 12 and the second additional planar coil 18 mentioned here is intended to be a gap between portions excluding a portion extending at an angle with an axial component and connecting the second planar coil 12 and the second additional planar coil 18.

Table 6 below shows the results of evaluating the performance with the configuration in which the thickness of the first planar coil 11 is set to 0.5 mm, the thickness of the second additional planar coil 18 is set to 0.25 mm, and the thickness of the second planar coil 12 is set to 0.25 mm, through a simulation under the same conditions as the simulation described in the first embodiment above. Table 2 below shows the Q value, the loss (the loss in the additional magnetic shield member made of aluminum, and the losses in the coils 11, 18, and 12), and the resistance (the coils 11, 18, and 12) of the coil component 10C, calculated by the simulation.

**[Table 6]**

| | COIL THICKNESS (mm) | Q VALUE | LOSS (W) | | | | RESISTANCE @85 kHz(Q) | |
|---|---|---|---|---|---|---|---|---|
| | | | MAGNETIC SHIELD | FIRST PLANAR COIL | SECOND PLANAR COIL + ADDITIONAL COIL | TOTAL | FIRST PLANAR COIL | SECOND PLANAR COIL + ADDITIONAL COIL |
| FOURTH EMBODIMENT | 050/025/025 | 352 | 51.1 | 74.3 | 36.0 | 161.4 | 0.044 | 0.097 |

According to the results in Table 6, the Q value of the coil component 10C is 352. The Q value of the coil component 10 according to the first embodiment described above is 269 under the same conditions. This results demonstrate that the Q value can be significantly increased by adding a planar coil having a thickness of 0.25 mm to the first planar coil 11 and the second planar coil 12.

Table 7 below shows the impedances (Ω) and the inductances of the coils and the coupling coefficients between the transmission-side and receiving-side coils in the coil component 10C, calculated at the same time in the simulation for obtaining the Q value. The items in Table 7 are the same as those in Table 5.

**[Table 7]**

| | | |
|---|---|---|
| IMPEDANCE (Ω) | FIRST PLANAR COIL | 0.044 |
| | SECOND PLANAR COIL + ADDITIONAL COIL | 0.097 |
| INDUCTANCE | FIRST PLANAR COIL | 22.8 |
| | SECOND PLANAR COIL + ADDITIONAL COIL | 56.1 |
| COUPLING COEFFICIENT | K1-2 | 0.84 |
| | K1-3 | 0.25 |
| | K1-4 | 0.20 |
| | K2-3 | 0.33 |
| | K2-4 | 0.25 |
| | K3-4 | 0.84 |

A plurality of second additional planar coils 18 may be provided between the first planar coil 11 and the second planar coil 12. In this case, the thickness of each first additional planar coil 16 is set to 0.15 mm or more and 0.35 mm or less under the condition that alternating current at 75 KHz or more and 100 KHz or less, 79 KHz or more and 90 KHz or less, or 85 KHz, or an AC magnetic field at 75 KHz or more and 100 KHz or less, 79 KHz or more and 90 KHz or less, or 85 KHz is supplied. This improves the performance of the coil component.

Although the embodiments have been described above, the embodiments may be further modified. For example, in each embodiment, an additional magnetic shield member containing aluminum, an aluminum alloy, copper, stainless steel, or the like may be further provided. Such an additional magnetic shield member is provided so as to cover the magnetic shield member 20. In each embodiment, the magnetic shield member 20 may be omitted. In addition, in each of the above-described embodiments, the holding body 30 entirely covers the first planar coil 11, but the holding body 30 may partially cover the first planar coil 11.

Table 8 below shows another simulation example in which the performances of the coil components according to the first to fourth embodiments are evaluated. In Table 8, 1-1 and 1-2 under the header "TARGET" correspond to the first embodiment. Similarly, 2-1 corresponds to the second embodiment. Comparison 1 corresponds to a comparative example for the first and second embodiments. Similarly, 3-1 corresponds to the first embodiment. Similarly, 4-1 and 4-2 correspond to the fourth embodiment. Comparisons 2 and 3 correspond to comparative examples for the third and fourth embodiments. The number of turns and the number of layers of the first planar coil 11 and the second planar coil are listed as the conditions. If the number of layers is two, it means that an additional planar coil is connected. The Q value, the loss, the impedance, the inductance, and the coupling coefficient are listed as the performance evaluation indices. The current to be passed has a frequency of 85 KHz. Current 1 under the header "LOSS" indicates the value (A) of the current flowing on the first planar coil 11 side, and current 2 indicates the value (A) of the current flowing on the second planar coil 12 side. It can be understood from Table 8 that the Q value of the coil component of the embodiment is higher than that of the comparative examples.

**[Table 8]**

| TARGET | FIRST PLANAR COIL | | SECOND PLANAR COIL | | Q VALUE | LOSS (W) IMPEDANCE | | | | | | | | INDUCTANCE | | COUPLING COEFFICIENT |
|---|---|---|---|---|---|---|---|---|---|---|---|---|---|---|---|---|
| | NUMBER OF TURNS (NUM BER OF LAYERS) | THICKNESS (mm) | NUMBER OF TURNS (NUMBER OF LAYERS) | THICKNESS (mm) | | MAGNETIC SHIELD | FIRST PLANAR COIL SIDE | CURRENT 1 (A) | SECOND PLANAR COIL SIDE | CURRENT 2 (A) | TOTAL | FIRST PLANAR COIL SIDE | SECOND PLANAR COIL SIDE | FIRST PLANAR COIL SIDE | SECOND PLANAR COIL SIDE | |
| 1-1 | 5(1) | 0.5 | 10(1) | 0.25 | 261 | 22.1 | 31.4 | 50.0 | 73.9 | 25.0 | 127.4 | 0.04 | 0.137 | 14.7 | 41.1 | 0.79 |
| 1-2 | 7(1) | 0.5 | 10(1) | 0.25 | 245 | 32 | 58.9 | 50 | 107.1 | 25 | 198.1 | 0.08 | 0.143 | 28.5 | 46.8 | 0.79 |
| 2-1 | 10(1) | 0.5 | 5(1) | 0.25 | 257 | 21.4 | 29.6 | 25 | 78.1 | 50 | 129.2 | 0.155 | 0.036 | 58 | 11.8 | 0.89 |
| COMPARISON 1 | 5(1) | 0.5 | 10(1) | 0.5 | 175 | 21.8 | 31.7 | 50 | 136.9 | 25 | 190.6 | 0.066 | 0.128 | 14.8 | 47.1 | 0.89 |
| 3-1 | 5(2) | 0.5/0.25 | 5(1) | 0.25 | 361 | 17.9 | 21.2 | 25 | 60.6 | 50 | 99.8 | 0.111 | 0.031 | 72.5 | 12.3 | 0.79 |
| 4-1 | 7(1) | 0.5 | 5(2) | 0.25 | 314 | 29.4 | 65.8 | 50 | 95.2 | 25 | 190.6 | 0.087 | 0.097 | 37.5 | 52.7 | 0.79 |
| 4-2 | 5(1) | 0.5 | 5(2) | 0.25 | 385 | 40.7 | 36.9 | 50 | 151.2 | 25 | 229.2 | 0.042 | 0.088 | 22.1 | 53.2 | 0.79 |
| COMPARISON 2 | 5(2) | 0.5/0.25 | 5(1) | 0.5 | 234 | 17.6 | 21.3 | 25 | 115.3 | 50 | 154.3 | 0.198 | 0.028 | 72.6 | 12.3 | 0.79 |
| COMPARISON 3 | 5(1) | 0.5 | 5(2) | 0.5 | 217 | 37.6 | 42 | 50 | 333.9 | 25 | 413.8 | 0.08 | 0.121 | 27.1 | 52.6 | 0.79 |

### <Other Embodiments>

In the above-described embodiments of the coil components, the performances of the coil components are significantly improved when alternating current at 75 KHz or more and 100 KHz or less, 79 KHz or more and 90 KHz or less, or 85 KHz is supplied, or when an AC magnetic field at 75 KHz or more and 100 KHz or less, 79 KHz or more and 90 KHz or less, or 85 KHz is supplied. When the frequency of the alternating current or AC magnetic field to be supplied is not in the range of 75 KHz or more and 100 KHz or less, embodiments of the coil component that can significantly improve the performance of the coil component differ from the above-described embodiments. Hereinbelow, embodiments according to the present disclosure that can improve the performance of the coil component in a frequency band other than the frequency band that is 75 KHz or more and 100 KHz or less will be described.

### (Another Embodiment 1)

First, as another embodiment (embodiment 1), when alternating current at 100 KHz or more and less than 200 KHz is supplied to the coil, or when an AC magnetic field at 100 KHz or more and less than 200 KHz is supplied to the coil, the coil component may have the following configuration.

A coil component including:
a first planar coil 11;
a second planar coil 12 that overlaps the first planar coil 11 and is not connected to the first planar coil 11; and
a capacitor 70 that is connected to one of the first planar coil 11 and the second planar coil 12 and constitutes a resonant circuit together with the first planar coil 11 or the second planar coil 12 to which the capacitor 70 is connected, wherein
the second planar coil 12 has a thickness of 0.15 mm or more and 0.275 mm or less, or 0.225 mm or more and 0.275 mm or less; and
the one of the first planar coil 11 or the second planar coil 12 that is not connected to the capacitor 70 is supplied with alternating current at 100 KHz or more and less than 200 KHz or an AC magnetic field at 100 KHz or more and less than 200 KHz.

Also in this embodiment, the magnetic shield member 20 and the holding body 30 may be provided. The detailed configurations of these components are the same as those of the above-described embodiments.

Referring to the frequency band of 100 KHz to 200 KHz in Fig. 5, the Q values under Condition 1 (Cu05/Cu025), Condition 2 (Cu0.5/Cu02), and Condition 3 (Cu05/Cu015) are significantly higher than the Q values under Condition 4 (Cu05/Cu035), Condition 5 (Cu05/Cu05), and Condition 6 (Cu05/Cu01). The results demonstrate that the coil component according to the other embodiment 1 is useful when alternating current at 100 KHz or more and less than 200 KHz is supplied or when an AC magnetic field at 100 KHz or more and less than 200 KHz is supplied.

### (Another Embodiment 2)

Next, as still another embodiment (embodiment 2), when alternating current at 200 KHz or more and 1 MHz or less is supplied to the coil, or when an AC magnetic field at 200 KHz or more and 1 MHz or less is supplied to the coil, the coil component may have the following configuration.

A coil component including:
a first planar coil 11;
a second planar coil 12 that overlaps the first planar coil 11 and is not connected to the first planar coil 11; and
a capacitor 70 that is connected to one of the first planar coil 11 and the second planar coil 12 and constitutes a resonant circuit together with the first planar coil 11 or the second planar coil 12 to which the capacitor 70 is connected, wherein
the second planar coil 12 has a thickness of 0.075 mm or more and 0.175 mm or less, and
the one of the first planar coil 11 or the second planar coil 12 that is not connected to the capacitor 70 is supplied with alternating current at 200 KHz or more and 1 MHz or less or an AC magnetic field at 200 KHz or more and 1 MHz or less.

Also in this embodiment, the magnetic shield member 20 and the holding body 30 may be provided. The detailed configurations of these components are the same as those of the above-described embodiments.

Referring to the frequency band of 200 KHz to 1 MKHz in Fig. 5, the Q values under Condition 3 (Cu05/Cu015) and Condition 6 (Cu05/Cu01) are, for the most part, significantly higher than the results under Condition 1 (Cu05/Cu025), Condition 2 (Cu0.5/Cu02), and Condition 4 (Cu05/Cu035). The results demonstrate that the coil component according to the other embodiment 2 is useful when alternating current at 200 KHz or more and less than 1 MHz is supplied or when an AC magnetic field at 200 KHz or more and less than 1 MHz is supplied. The Q value under Condition 5 (Cu05/Cu05) can be equal to or higher than those under Conditions 3 and 6 in a band close to 1 MHz, but Conditions 3 and 6 are more advantageous in consideration of the amount of material used.

### (Another Embodiment 3)

Next, as still another embodiment (embodiment 3), when alternating current at 1.1 MHz or more is supplied to the coil, or when an AC magnetic field at 1.1 MHz or more is supplied to the coil, the coil component may have the following configuration.

A coil component including:
a first planar coil 11;
a second planar coil 12 that overlaps the first planar coil 11 and is not connected to the first planar coil 11; and
a capacitor 70 that is connected to one of the first planar coil 11 and the second planar coil 12 and constitutes a resonant circuit together with the first planar coil 11 or the second planar coil 12 to which the capacitor 70 is connected, wherein
the second planar coil 12 has a thickness of 0.45 mm or more, and
the one of the first planar coil 11 or the second planar coil 12 that is not connected to the capacitor 70 is supplied with alternating current at 1.1 MHz or more or an AC magnetic field at 1.1 MHz or more.

Also in this embodiment, the magnetic shield member 20 and the holding body 30 may be provided. The detailed configurations of these components are the same as those of the above-described embodiments.

It is presumed that the Q value under Condition 5 (Cu05/Cu05) tends to be significantly higher than those under the other conditions in the frequency band of 1 MKHz or higher in Fig. 5. It can be presumed that this tendency continues when the condition becomes 1.1 MHz or more. Although Fig. 5 evaluates the Q values up to 1 MKHz, the present inventor has confirmed that the Q value under Condition 5 is higher than those under Conditions 1 to 4 and 6 at, for example, 1.1 MHz, 6.78 MHz, and 13.56 MHz. The coil component according to the other embodiment 3 is based on this tendency.

Although the embodiments of the present disclosure have been described above, various modifications may be made to the above-described embodiments. Such modifications are also included in the technical scope of the present disclosure.

For example, in the above embodiments, an example in which both the first planar coil 11 and the second planar coil 12 are formed of copper has been described, but the present disclosure is not limited to this configuration. For example, when the first planar coil 11 is formed of aluminum and the second planar coil 12 is formed of copper, a relatively large Q value can be ensured while achieving weight reduction. Alternatively, the first planar coil 11 may be formed of copper, and the second planar coil 12 may be formed of aluminum.

Table 9 below shows the results of calculating the Q values (supplied current at 85 KHz) of the coil components 10 according to the first embodiment with different thickness conditions of the coils for each of the case (1) the first planar coil 11 is formed of copper and the second planar coil 12 is formed of aluminum, the case (2) the first planar coil 11 is formed of aluminum and the second planar coil 12 is formed of copper, and the case (3) the first planar coil 11 is formed of copper and the second planar coil 12 is formed of copper. Note that the combination of the first planar coil of 0.5 mm and the second planar coil of 0.5 mm is a comparative example.

**[Table 9]**

| | | | | | | | |
|---|---|---|---|---|---|---|---|
| | FIRST PLANAR COIL THICKNESS (mm) | 0.50 | 0.50 | 0.50 | 0.50 | 0.50 | 0.50 |
| | SECOND PLANAR COIL THICKNESS (mm) | 0.50 | 0.35 | 0.25 | 0.20 | 0.15 | 0.10 |
| FIRST PLANAR COIL / SECOND PLANAR COIL | Cu/AL | 182.4 | 229.3 | 234.7 | 220.0 | 191.2 | 149.9 |
| | AL/Cu | 170.6 | 220.9 | 251.9 | 250.5 | 230.8 | 189.9 |
| | Cu/Cu | 178.3 | 233.7 | 269.0 | 267.6 | 244.9 | 199.5 |

From the above results, it can be said that the Q values are more advantageous in the order of Cu/Cu > AL/Cu > Cu/AL (*first planar coil/second planar coil). The weight of the coil increases in the order of Cu/Cu > Cu/AL > AL/Cu (* first planar coil/second planar coil). According to the results, it can be said that a relatively large Q value can be ensured while achieving weight reduction when, for example, the first planar coil 11 is formed of aluminum and the second planar coil 12 is formed of copper.

### Reference Signs List

S power transfer system
1 power transmission device
1A high-frequency current supply part
2 power receiving device
2A conversion part
10, 10A, 10B, 10C, 10D coil component
11 first planar coil
11n turn portion
11E conductor
12 second planar coil
12E conductor
16 first additional planar coil
16n turn portion
16E conductor
18 second additional planar coil
18n turn portion
18E conductor
20 magnetic shield member
30 holding body
31 first layer portion
32 second layer portion
33 third layer portion
34 fourth layer portion
35 wall portion
51 power supply/receiving first terminal
52 power supply/receiving second terminal
61 coupling first terminal
62 coupling second terminal
70 capacitor
C1 first center axis
C2 second center axis
C3 third center axis
C4 fourth center axis

## Claims

1. A coil component comprising:
a first planar coil;
a second planar coil that overlaps the first planar coil and is not connected to the first planar coil; and
a capacitor that is connected to one of the first planar coil and the second planar coil and constitutes a resonant circuit together with the one of the first planar coil and the second planar coil to which the capacitor is connected, wherein
the second planar coil has a thickness of 0.15 mm or more and 0.35 mm or less.

2. The coil component according to claim 1, wherein the capacitor is connected to one of the first planar coil and the second planar coil having a higher inductance.

3. The coil component according to claim 1, further comprising a magnetic member having magnetism and including a portion covering a surface of the first planar coil opposite from a surface facing the second planar coil.

4. The coil component according to claim 3, wherein
the coil component includes only the first planar coil and the second planar coil having the same number of turns as planar coils, and
the capacitor is connected to the first planar coil.

5. The coil component according to claim 3, wherein the magnetic member integrally holds the first planar coil and the second planar coil in a state in which the first planar coil and the second planar coil overlap each other with a gap therebetween, and the magnetic member further includes a portion covering a side surface of the first planar coil and a portion filling the gap.

6. The coil component according to claim 3, wherein the magnetic member contains a resin and magnetic particles held in the resin.

7. The coil component according to claim 3, wherein the magnetic member includes a wall portion protruding from the second planar coil.

8. The coil component according to claim 1, wherein the first planar coil includes a plurality of turn portions arranged in a direction orthogonal to a center axis of the first planar coil and the second planar coil includes a plurality of turn portions arranged in a direction orthogonal to a center axis of the second planar coil, at least one of the plurality of turn portions of the first planar coil and at least one of the plurality of turn portions of the second planar coil at least partially overlap each other in an axial direction of the first planar coil, and the turn portions of the first planar coil and the second planar coil overlapping in the axial direction of the first planar coil at least partially extend parallel to each other.

9. The coil component according to claim 8, wherein
the number of the plurality of turn portions of the first planar coil and the number of the plurality of turn portions of the second planar coil are equal, and
a turn portion of the first planar coil that is an n-th as counted from a center of the first planar coil at least partially overlap, in the axial direction of the first planar coil, and at least partially extend parallel to a turn portion of the second planar coil that is the n-th as counted from a center of the second planar coil.

10. The coil component according to claim 8, wherein
the number of the plurality of turn portions of the first planar coil is half or twice the number of the plurality of turn portions of the second planar coil,
when the number of the plurality of turn portions of the first planar coil is half the number of the plurality of turn portions of the second planar coil, the turn portion of the first planar coil that is the n-th as counted from the center of the first planar coil at least partially overlap, in the axial direction of the first planar coil, and at least partially extend parallel to a turn portion of the second planar coil that is a ((2 × n) - 1)-th as counted from the center of the second planar coil and a turn portion of the second planar coil that is a (2 × n)-th as counted from the center of the second planar coil, and
when the number of the plurality of turn portions of the first planar coil is twice the number of the plurality of turn portions of the second planar coil, a turn portion of the second planar coil that is an m-th as counted from the center of the second planar coil at least partially overlap, in the axial direction of the first planar coil, and at least partially extend parallel to a turn portion of the first planar coil that is a ((2 × m) - 1)-th as counted from the center of the first planar coil and a turn portion of the first planar coil that is a (2 × m)-th as counted from the center of the first planar coil.

11. The coil component according to claim 1, wherein the first planar coil has a thickness of 0.1 mm or more and 1.0 mm or less.

12. The coil component according to claim 1, wherein the first planar coil and the second planar coil overlap each other with a gap therebetween, and the gap is 0.5 mm or more and 2.0 mm or less.

13. The coil component according to claim 1, further comprising: at least one first additional planar coil disposed between the first planar coil and the second planar coil and connected in series to the first planar coil,
wherein the first additional planar coil has a thickness of 0.15 mm or more and 0.35 mm or less.

14. The coil component according to claim 13, wherein the capacitor is connected to the first planar coil via the first additional planar coil.

15. The coil component according to claim 1, further comprising: at least one second additional planar coil disposed between the first planar coil and the second planar coil and connected in series to the second planar coil,
wherein the second additional planar coil has a thickness of 0.15 mm or more and 0.35 mm or less.

16. The coil component according to claim 15, wherein the capacitor is connected to the second planar coil via the second additional planar coil.

17. The coil component according to any one of claims 1 to 16, wherein the one of the first planar coil and the second planar coil that is not connected to the capacitor is supplied with alternating current at 79 KHz or more and 90 KHz or less, or an AC magnetic field at 79 KHz or more and 90 KHz or less.

18. A power transmission device comprising the coil component according to any one of claims 1 to 16.

19. The power transmission device according to claim 18, further comprising a high-frequency current supply part that supplies alternating current at 79 KHz or more and 90 KHz or less to the coil component.

20. A power receiving device comprising the coil component according to any one of claims 1 to 16.

21. The power receiving device according to claim 20, further comprising a conversion part that converts alternating current at 79 KHz or more and 90 KHz or less generated by electromagnetic induction in the coil component into direct current.

22. A power transfer system comprising: a power transmission device; and a power receiving device, wherein at least one of the power transmission device and the power receiving device includes the coil component according to any one of claims 1 to 16.

23. A power transfer method comprising:
supplying alternating current at 79 KHz or more and 90 KHz or less to the coil component according to any one of claims 1 to 14, the coil component being provided in a power transmission device; and
generating a current in a power receiving device based on a magnetic field generated in the power transmission device.

24. A coil component comprising:
a first planar coil;
a second planar coil that overlaps the first planar coil and is not connected to the first planar coil; and
a capacitor that is connected to one of the first planar coil and the second planar coil and constitutes a resonant circuit together with the one of the first planar coil and the second planar coil to which the capacitor is connected, wherein
the second planar coil has a thickness of 0.225 mm or more and 0.275 mm or less, and
the one of the first planar coil and the second planar coil that is not connected to the capacitor is supplied with alternating current at 100 KHz or more and less than 200 KHz, or an AC magnetic field at 100 KHz or more and less than 200 KHz.

25. A coil component comprising:
a first planar coil;
a second planar coil that overlaps the first planar coil and is not connected to the first planar coil; and
a capacitor that is connected to one of the first planar coil and the second planar coil and constitutes a resonant circuit together with the one of the first planar coil and the second planar coil to which the capacitor is connected, wherein
the second planar coil has a thickness of 0.075 mm or more and 0.175 mm or less, and
the one of the first planar coil and the second planar coil that is not connected to the capacitor is supplied with alternating current at 200 KHz or more and 1 MHz or less, or an AC magnetic field at 200 KHz or more and 1 MHz or less.

26. A coil component comprising:
a first planar coil;
a second planar coil that overlaps the first planar coil and is not connected to the first planar coil; and
a capacitor that is connected to one of the first planar coil and the second planar coil and constitutes a resonant circuit together with the one of the first planar coil and the second planar coil to which the capacitor is connected, wherein
the second planar coil has a thickness of 0.45 mm or more, and
the one of the first planar coil and the second planar coil that is not connected to the capacitor is supplied with alternating current at 1.1 MHz or more or an AC magnetic field at 1.1 MHz or more.
